# EUROPEAN PATENT SPECIFICATION

(11) **EP 0 366 112 B1**
(45) Date of publication and mention of the grant of the patent: **08.03.1995**
(21) Application number: 89119838.4
(22) Date of filing: 25.10.1989
(51) Int. Cl.: G06K 11/08, G06F 3/033

(54) **Optical coordinate input apparatus and position indicator therefor**
Optische Koordinateneingabevorrichtung und Positionszeiger dafür
Dispositif optique pour l'entrée de coordonnées et indicateur de position associé

(30) Priority: 26.10.1988 JP 270519/88; 22.05.1989 JP 58156/89 U; 01.06.1989 JP 139887/89
(43) Date of publication of application: 02.05.1990
(73) Proprietor: Wacom Co., Ltd., Kitakatsushika-gun Saitama-ken, 340-02 (JP)
(72) Inventor: Murakami, Azuma, Kitakatsushika-gun Saitama-ken, 340-02 (JP); Saito, Norio, Kitakatsushika-gun Saitama-ken, 340-02 (JP)
(74) Representative: TER MEER STEINMEISTER & PARTNER GbR

(56) References cited:
- DE-A- 2 355 616
- GB-A- 1 466 471
- US-A- 4 294 543
- US-A- 4 733 022

## Description

The present invention relates to an optical coordinate input apparatus and a position indicator thereof capable of inputting information about manuscripts, figures, precise drawings, and the like to a host apparatus. More particularly, the present invention relates to an optical coordinate input apparatus and a position indicator thereof which can be optionally applied to a subject two-dimensional coordinate plane and in which a region to which coordinate input is indicated is substantially freed from restrictions.

There have been a variety of so-called coordinate input apparatuses capable of inputting two dimensional coordinates, the apparatuses being for example of an electrostrictive type, an electromagnetic induction type, a pressure sensitive type, an electrostatic induction type, or the like. All of these apparatuses are basically arranged so as to have a coordinate indicating portion constituted by combining a tablet (or a keyboard) defining a two dimensional coordinate plane and a movable position indicating apparatus. The tablet and the position indicating apparatus communicate with each other by means of an electric, magnetic, or mechanical signal so that the position on the two-dimensional coordinate plane of the position indicating apparatus is detected. Thus, the input coordinates are indicated.

However, the above-described conventional coordinate input apparatus is constituted such that the tablet thereof is arranged to be an exclusive tablet of a special structure having predetermined dimensions, shape, and structure in accordance with the physical quantity to be used for the purpose of enabling the signal transmission/receipt to and from the position indicating apparatus. Therefore, there has been a paper size limit from the viewpoint of the manufacturing technology, the largest paper size being about A0 size even if the electromagnet type apparatus, which is considered to be advantageous in accuracy and to be thereby suitable to larger sizes, is used. Furthermore, the plane region to which input of the coordinates can be provided has been necessarily limited by the area of the tablet. Therefore, input of graphics drawn over an optional area cannot be freely provided regardless of whether the area is wide or narrow.

The position indicator of the above-described conventional coordinate input apparatus has been always used in combination with a special tablet capable of transmitting and receiving a signal. Therefore, the conventional coordinate input apparatus cannot solely, that is, in a manner separated from the tablet, be applied to an optional two dimensional coordinate plane. Furthermore, since the dimensions of the plane of the exclusive tablet have been physically limited, the position indicator cannot be used for freely inputting two dimensional information in a wide range.

GB-A-1 466 471 discloses an optical coordinate input apparatus comprising a circular reflective position indicator and a scanning means for scanning a two dimensional coordinate plane from two different points spaced apart by a predetermined distance along a reference line. From each of the points, the angle between the light beam reflected from the indicator and the reference line is measured. From the measured angles and the distance between the two points, the coordinates of the indicator can be calculated. Furthermore, GB-A-1 466 471 discloses a reflective position indicator having a v-shaped groove in its reflecting surface, as well as an indicator having a flat reflective surface and a curved reflecting surface.

DE-A-2 355 616 discloses an apparatus similar to the one in GB-A-1 466 471 and in addition teaches the use of polarizers to polarize the light beams generated by the scanning means to avoid interference between the reflected light beams.

A first object of the present invention is to provide a coordinate input apparatus freed from the conventional restriction of the tablet and thereby capable of being applied to a wide two dimensional coordinate plane.

A second object of the present invention is to provide a coordinate input apparatus in which the distance between the two points disposed in the light source portion and positioned away from each other on the reference line can be adjusted in accordance with the area of the coordinate input region.

According to a first aspect of the present invention there is provided an optical coordinate input apparatus as defined in claim 1.

In an embodiment, the optical coordinate input apparatus is constituted such that the light source portion is mounted on the coordinate plane and includes a pair of light source units capable of emitting light in a manner to angularly scan the coordinate plane from two points disposed away from each other on a reference line and capable of receiving light which is propagating reversely after the light has been reflected by the position indicator when the incident light beams coincide with the straight lines connecting the position indicator with each of said points, the light source position being so arranged that the pair of light source units are movable along the reference line so that the distance between the two points is adjusted so as to correspond to the size of the coordinate plane.

According to the thus constituted coordinate input apparatus, the pair of light source units in the light source portion are relatively moved to each other along the reference line in accordance with the area of the coordinate input region. As a result, an extremely excellent optical coordinate input apparatus in terms of various usage can be provided since coordinates can be input to any arbitrarity sized coordinate input regions.

A third object of the present invention is to provide a position indicator having a function of selectively reflecting an incident light beam passing toward the central axis which represents the position of the position indicator so as to return the reflected light beam to the light source of the incident light. The position indicator also has a function in the case where continuous inputs of coordinates are conducted by continuously and manually moving the position indicator (a cursor) on the plane, the function being such that reflected light beam is kept to coincide with the incident light beam even if the position indicator is inclined with respect to the coordinate plane during the movement.

According to a second aspect of the present invention there is provided a position indicator as defined in claim 11.

In an embodiment, the position indicator has an annular lens member made of an optical material in the form of an annular shape having a concentric inner surface and an outer surface, in which the inner surface is parallel with the geometric central axis of the annular lens member and the outer surface is formed so as to have a shape curved outward with a predetermined curvature whereby a lens having its optical axis in the radial direction of the annular shape is achieved, the lens having its focal point on the inner surface. A reflection layer is disposed on the inner surface of the annular lens member and capable of reflecting light which has been made incident upon along a plane including the concentric axis and the radial optical axis, the light being reflected in parallel to the incident light. As a result, the incident light beams passing toward the central axis of the position indicator can be selectively reflected, and the reflected light beam can be returned to the light source of the incident light. Furthermore, when the position indicator is continuously and manually moved on the plane for conducting a continuously inputting of coordinates, if the position indicator is inclined with respect to the coordinate plane during the movement, the reflected light beam can be kept within the optical paths of incident light beams.

These and further objects and features of the invention will appear more fully form the following description.
Fig. 1(a) is a perspective external view of an optical coordinate input system;
Fig. 1(b) is a view which illustrates the arrangement of an optical system similar to the one disclosed in GB-A-1 466 471;
Fig. 2 is a perspective view which illustrates a position indicator for use in Fig. 1(b);
Fig. 3 is a block diagram of an electric circuit for use in the Fig. 1(b) arrangement;
Fig. 4 is a flow chart of a program for use in the Fig. 1(b) arrangement;
Fig. 5 is a view which illustrates another arrangement of an optical system which is not an embodiment but is useful for understanding the invention;
Fig. 6(a) is a perspective view which illustrates a position indicator;
Figs. 6(b) and 6(c) are views which illustrate a mirror portion of the position indicator similar to one in GB-A-1 466 471;
Fig. 7 is a block diagram of an electric circuit for use in the Fig. 5 arrangement;
Fig. 8(a) is a view which illustrates a first detection data format;
Fig. 8(b) is a view which illustrates a second detection data format;
Figs. 9(a) and 9(b) are flow charts of a program for use in the Fig. 5 arrangement;
Fig. 10 is a view which illustrates another arrangement of an optical system which is not an embodiment but is useful for understanding the invention;
Fig. 11(a) is a perspective view which illustrates a position indicator;
Fig. 11(b) and 11(c) are views which illustrate the mirror portion of the position indicator;
Fig. 12 is a block diagram of the electric circuit for use in the Fig. 10 arrangement;
Figs. 13(a) and 13(b) are schematic views which illustrate a coordinate input apparatus according to a first embodiment;
Fig. 14 is a front elevational view which illustrates a light source portion of the coordinate input apparatus;
Fig. 15(a) is a plan view which illustrates an embodiment of a reflection type position indicator;
Fig. 15(b) is a cross sectional view which illustrates the reflection type position indicator; and
Fig. 15(c) is a view which illustrates the operation of the reflection type position indicator.

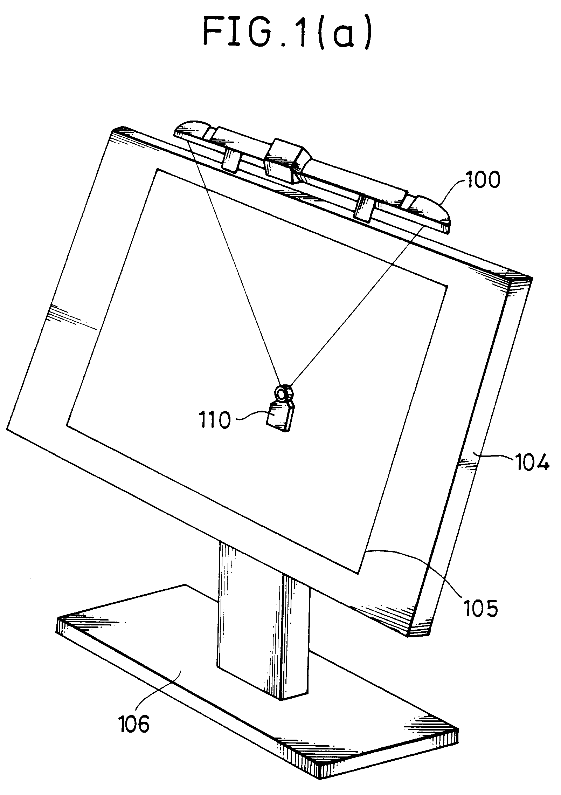

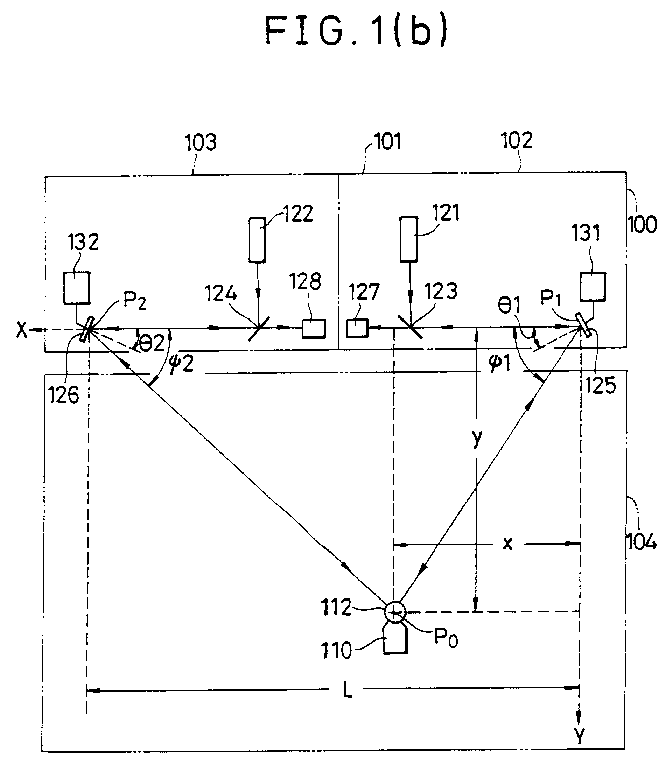

Fig. 1(a) is a perspective external view which illustrates an optical coordinate input system, and Fig. 1(b) is a view which illustrates the arrangement of an optical system similar to the one disclosed in GB-A-1 466 471. Referring to the drawings, reference numeral 100 represents an optical source portion accommodating portion, 101 represents a light source portion consisting of a pair of light source units 102 and 103. Reference numeral 104 represents an input panel, 105 represents a coordinate input region, 106 represents a support frame for the input panel 104. Reference numeral 110 represents a reflection type position indicator (or a cursor), 121 and 122 represent lasers, 123 and 124 represent half mirrors, 125 and 126 represent first and second rotary mirrors, and 127 and 128 represent first and second photosensors.

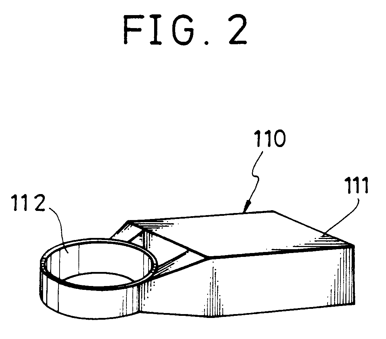

As shown in Fig. 2, the position indicator 110 is constituted in such a manner that a cylindrical mirror portion 112 is disposed on one side surface of a box-like main body 111, the bottom portion of the main body 111 and the same of the mirror portion 112 being arranged such that they can be held in parallel to a two dimensional coordinate plane, that is, plane XY. A mirror formed on the outer surface of the mirror portion 112 is arranged to be perpendicular to the bottom surface of the mirror portion 112. A transparent display plate (omitted from illustration) made of synthetic resin is attached to the above-described bottom surface of the mirror portion 112. A hair-cross mark showing the center of the mirror portion 112 is provided on the above-described display plate. Thus, the coordinate input position can be designated by moving the position indicator 110 over the above-described plane XY.

Each of the lasers 121 and 122 comprises a semiconductor laser so as to provide a laser beam, which is emitted from the laser 121, made incident upon a rotational axis of a first rotary mirror 125 in parallel to the plane XY via the half mirror 123 disposed on X-axis, the first rotary mirror 125 being disposed at the origin of the XY plane. On the other hand, the laser beam emitted from the laser 122 is made incident upon the rotational axis of a second rotary mirror 126 in parallel to the plane XY via the half mirror 124 disposed on X-axis, the second rotary mirror 126 being disposed on the X-axis at a predetermined distance L, for example, 5 m, kept from the first rotary mirror 125. Each of the first and second photosensors 127 and 128 comprises an NPN-phototransistor whose collector is connected to a D.C. power source. The first photosensor 127 is positioned so as to be capable of detecting, via the half mirror 123, the laser beam which is reflected by the first rotary mirror 125 in the same direction as that of the light beam made incident upon the first rotary mirror 125, the laser beam thus detected being the laser beam emitted from the laser 121. The second photosensor 128 is positioned so as to be capable of detecting, via the half mirror 124, the laser beam which is reflected by the second rotary mirror 126 in the same direction as that of the light beam made incident upon the second rotary mirror 126, the laser beam thus detected being the laser beam emitted from the laser 122. Specific points P₁ and P₂ on the respective rotational axes of the rotary mirrors 125 and 126 are positioned on the same reference line which is in parallel to X-axis on the coordinate plane, the specific points P₁ and P₂ being positioned away from each other.

Thus, the first light source unit 102 is constituted by the laser 121, the half mirror 123, the rotary mirror 125, the photosensor 127, hand a drive portion 131 to be described later. The second light source unit 103 is constituted by the laser 122, the half mirror 124, the rotary mirror 126, the photosensor 128, and a drive portion 132.

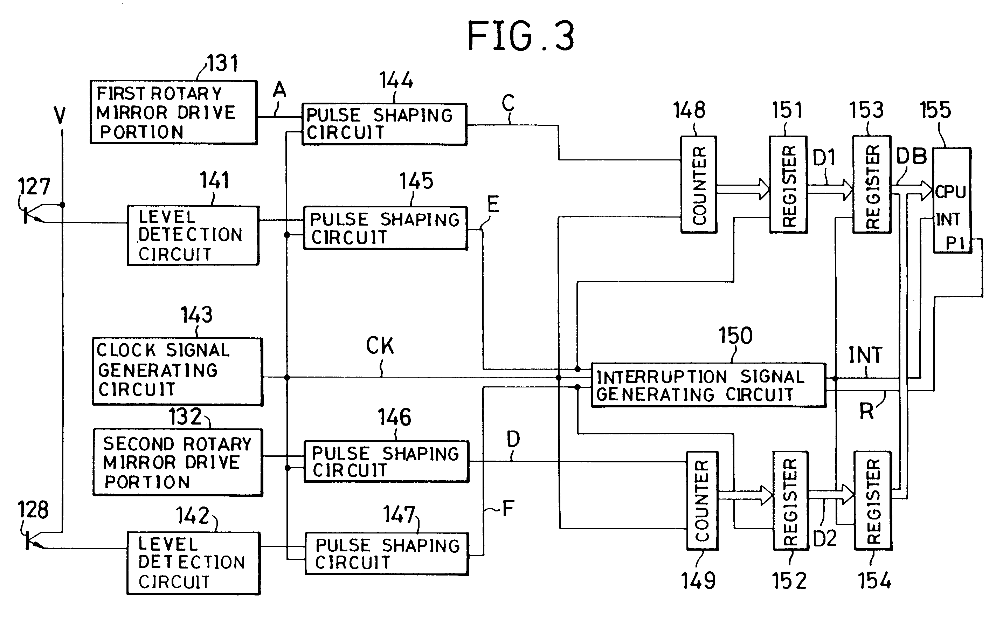

Fig. 3 is a block diagram which illustrates the electric circuit for use in the Fig. 1(b) arrangement. Referring to the drawing, reference numeral 131 represents a first rotary mirror drive portion capable of rotating the first rotary mirror shown in Fig. 1 counterclockwise at uniform angular velocity ω. The first rotary mirror drive portion 131 is also capable of transmitting pulse signal A of logic "1" having a predetermined pulse width T_{PW} when the normal line of the surface of the first rotary mirror 125 agrees with the path at the incident light beam emitted from the laser 121. The pulse width T_{PW} of the pulse signal A is arranged to be shorter than time Tf which it takes the first rotary mirror 125 to complete one rotation. Reference numeral 132 represents a second rotary mirror drive portion capable of rotating the second rotary mirror 126 shown in Fig. 1 clockwise at uniform angular velocity ω. The second rotary mirror drive portion 132 is also capable of transmitting a pulse signal B of logic "1" having a predetermined pulse width T_{PW} when the normal line of the surface of the second rotary mirror 126 agrees with the path of the incident light beam emitted from the laser 122 . The pulse width T_{PW} of the pulse signal B is arranged to be shorter than time Tf which it takes the second rotary mirror 126 to complete one rotation.

Reference numerals 141 and 142 represent level detection circuits which are similar to each other and each of which is constituted by resistors and operation amplifiers. The level detection circuit 141 is capable of converting a photoelectric current transmitted from the emitter of the first photosensor 127 into voltage. Furthermore, the level detection circuit 141 causes its output signal to be logic "1" when the thus converted voltage reaches a predetermined reference level. The level detection circuit 142 is capable of converting a photoelectric current transmitted from the emitter of the second photosensor 128 into voltage. Furthermore, the level detection circuit 142 causes its output signal to be logic "1" when the thus converted voltage reaches a predetermined reference level.

Reference numeral 143 represents a clock signal generating circuit capable of transmitting clock signal CK of predetermined period T_{ck}.

Reference numerals 144 to 147 represent pulse shaping circuits each of which is constituted by a flip-flop and a logical circuit and capable of transmitting a pulse signal having the width of one clock pulse when it detects that the input signal has been changed from logic "0" to logic "1". The pulse shaping circuit 144 receives the output signal A from the first rotary mirror drive portion 131 and the clock signal CK and transmits signal C. The pulse shaping circuit 145 receives the output signal from the level detection circuit 141 and the clock signal CK and transmits signal E. The pulse shaping circuit 146 receives the output signal B from the second rotary mirror drive portion 132 and the clock signal CK and transmits signal D. The pulse shaping circuit 147 receives the output signal from the level detection circuit 142 and the clock signal CK and transmits signal F.

Reference numerals 148 and 149 represent counters each of which counts freely in response to the clock signal CK. The counter 148 is arranged to be reset by the pulse signal C transmitted from the pulse shaping circuit 144, while the counter 149 is arranged to be reset by the pulse signal D transmitted from the pulse shaping circuit 146.

Reference numeral 150 represents an interruption signal generating circuit constituted by a flip-flop and a logical circuit and capable of receiving the output signals E and F from the pulse shaping circuits 145 and 147 and the clock signal CK. The interruption signal generating circuit 150 is further capable of transmitting interruption signal INT to a CPU 155 to be described later after it has caused the interruption signal INT to be logic "1" on condition that either the pulse signal E or F is inputted and then the other pulse signal is inputted or condition that both the pulse signals are inputted. In addition, the interruption signal generating circuit 150 causes the interruption signal INT to be logic "0" under condition that pulse reset signal R of logic "1" is inputted thereto from the CPU 155.

Reference numerals 151 and 152 represent registers, the input of the register 151 being connected to the output of the counter 148 so as to latch output data from the counter 148 at the front portion of the pulse signal E transmitted from the pulse shaping circuit 145. The input of the register 152 is connected to the output of the counter 149 so as to latch output data from the counter 149 at the front portion of the pulse signal F transmitted from the pulse shaping circuit 146. Reference numerals 153 and 154 represent tri-state output registers, the input of the register 153 being connected to the output of the register 151 so as to latch output data from the register 151 when the interruption signal INT is changed from logic "0" to logic "1". On the other hand, the input of the register 154 is connected to the output of the register 152 so as to latch output data from the register 152 when the interruption signal INT is changed from logic "0" to logic "1".

Reference numeral 155 represents a CPU connected to the outputs of the registers 153 and 154 via a data bus DB and capable of receiving data registered in the registers 153 and 154 when the interruption signal INT becomes logic "1". The CPU 155 is furthermore capable of transmitting pulse reset signal R of logic "1" to output port P₁ after inputting data.

The above-described angle detection means comprises first and second rotary mirror drive portions 131 and 132, the clock signal generating circuit 143, the pulse shaping circuits 144 and 146, and the counters 148 and 149. A coordinate arithmetic means, that is, a calculating portion comprises the level detection circuits 141 and 142, the clock signal generating circuit 143, the pulse shaping circuits 145 and 147, the interruption signal generating circuit 150, the registers 151 to 154, the CPU 155, and a program, to be described later, capable of operating the CPU 155.

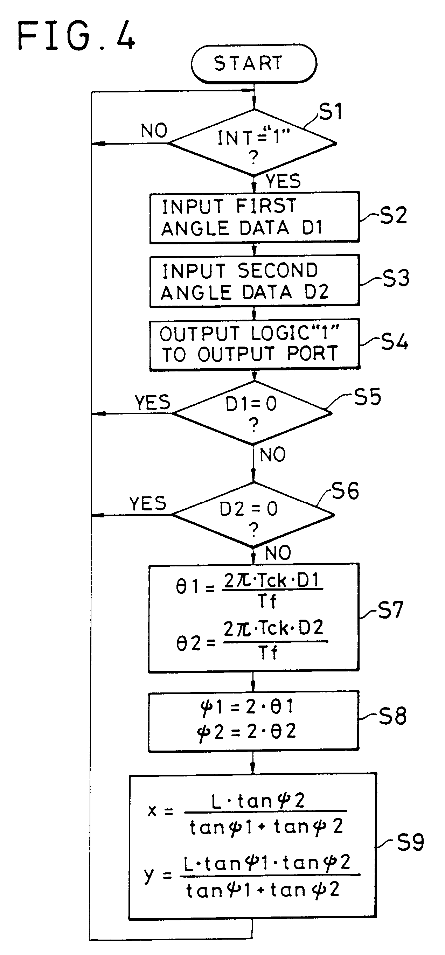

The operation of the Fig. 1(b) arrangement will be described in accordance with a flow chart of the program shown in Fig. 4.

Description will be made assuming as an example that the coordinates of the position of point P₀ are inputted on XY plane as shown in Fig. 1 by the above-described position indicator 110 which has been moved over the XY plane so as to cause the center of the mirror portion 112 to coincide with point P₀.

After the laser beam emitted from the laser 121 has been made incident upon the first rotary mirror 125 at incident angle ϑ1 via the half mirror 123, the reflected light beam is capable of passing from the specific point P1 of the rotary mirror 125 toward the center of the mirror portion 112 of the position indicator 110. The laser beam reflected by the mirror portion 112 is made incident upon the first photosensor 127 via the first rotary mirror 125 and the half mirror 123. At this time, the photoelectric current transmitted from the first photosensor 127 increases so that the output signal from the level detection circuit 141 becomes logic "1". As a result, the pulse signal E is transmitted from the pulse shaping circuit 145. After the laser beam emitted from the laser 122 has been made incident upon the second rotary mirror 126 at incident angle ϑ2 via the half mirror 124, the reflected light beam is capable of passing from the specific point P₂ of the rotary mirror 126 toward the center of the mirror portion 112. The laser beam reflected by the mirror portion 112 is made incident upon the second photosensor 128 via the second rotary mirror 126 and the half mirror 124. At this time, the photoelectric current transmitted from the second photosensor 128 increases so that the output signal from the level detection circuit 142 becomes logic "1". As a result, the pulse signal F is transmitted from the pulse shaping circuit 147.

Output data from the counter 148 are caused to be latched in the register 151 by the pulse signal E so as to be registered therein as angular data D1 representing the incident angle ϑ1 upon the first rotary mirror 125. On the other hand, output data from the counter 149 is caused to be latched in the register 152 by the pulse signal F so as to be registered therein as angular data D2 representing the incident angle ϑ2 upon the second rotary mirror 126. Angular data D1 and D2 are latched in the registers 153 and 154 by the interruption signal INT.

The CPU 155 always supervises whether or not the interruption signal INT is "1" (in step S1, the term "step" will be omitted hereinafter). When the interruption signal INT becomes logic "1", the CPU 155 receives the angular data D1 from the register 153 via the data bus (S2) and also receivess the angular data D2 from the register 154 (S3). Then, the CPU 155 transmits a signal of logic "1" to the output port P1 for a predetermined time period (S4), and determines whether or not the angular data D1 is 0 (S5). If it is determined that the angular data D1 is 0, the flow returns to S1. If it is determined that the angular data D1 is not 0, the CPU 155 determines whether or not the angular data D2 is 0 (S6). If it is determined that the angular data D2 is 0, the flow returns to S1. If it is determined that the angular data D2 is not 0, incident angle ϑ1 of the laser beam on the first rotary mirror 125 and incident angle ϑ2 on the second rotary mirror 126 are calculated by using the angular data D1 and D2 from the following equations (S7).$\text{ϑ1 = 2π · Tck · D1/Tf (radian)}$$\text{ϑ1 = 2π · Tck · D2/Tf (radian)}$
where symbol Tck represents the period of the clock signal CK, Tf represents the time it takes the first and second rotary mirrors 125 and 126 to complete one rotation, these factors being previously stored as constants.

Then, the angles φ1 and φ2 between the incident light and reflected light on the first and second rotary mirrors 125 and 126 are obtained by doubling the incident angles ϑ1 and ϑ2 (S8).$\text{φ1 = 2 · ϑ1}$$\text{φ2 = 2 · ϑ2}$

Then, X-coordinate and Y-coordinate of the point P₀ is obtained by using the following equation (S9).$\text{x = L · tan φ2/(tan φ1 + tan φ2)}$$\text{y = L · tan φ1 · tan φ2/(tan φ1 + tan φ2)}$
where symbol L represents the distance between the first rotary mirror 125 and the second rotary mirror 126, the distance being previously stored in the program.

After the x-coordinate and y-coordinate have been obtained, the flow returns to S1.

Although two lasers capable of emitting laser beams are used in this arrangement, a structure may be employed as an alternative to this in which one laser is used, the laser beam emitted therefrom being arranged to be made incident upon the first and second rotary mirrors 125 and 126 by using a half mirror a full sized mirror.

According to the Fig. 1(b) arrangement, although rotary mirrors each of which has a mirror surface are employed as the first and second rotary mirrors 125 and 126, rotary mirrors each of which has a plurality of mirror surfaces may be employed. In this case, more accurate coordinates can be obtained since the intervals of the detections of the coordinates can be reduced by conducting calculations arranged to correspond to the polygon mirrors.

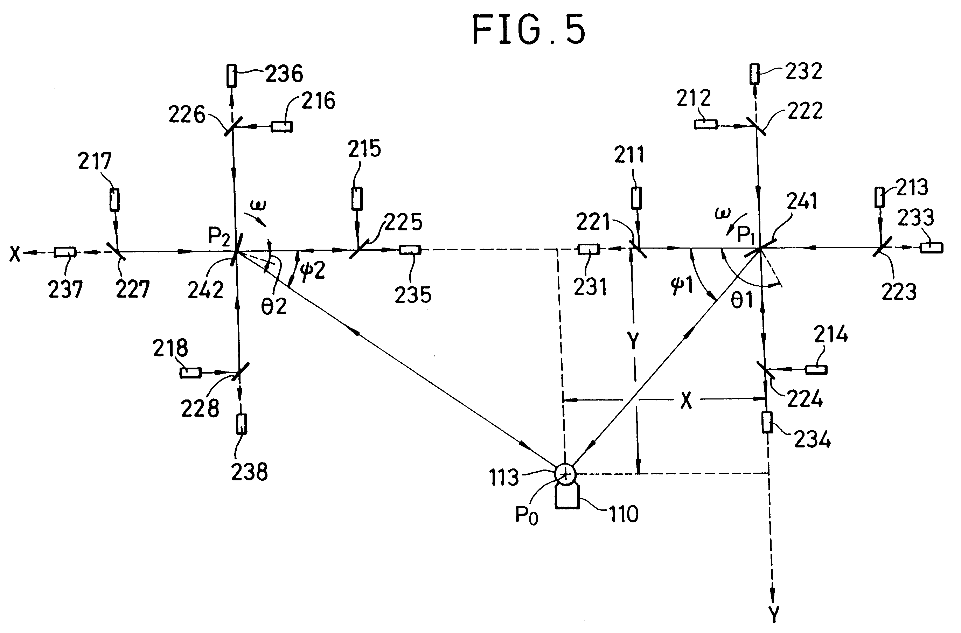

Fig. 5 is a view which illustrates another arrangement of an optical system which is not an embodiment but is useful for understanding the invention. Referring to the drawing, reference numeral 110 represents a position indicator, 211 to 218 represent lasers, 221 to 228 represent half mirrors, 231 to 238 represent photosensors which comprise NPN-phototransistors whose collectors are connected to a D.C. power source. Reference numerals 241 and 242 represent first and second rotary mirrors each of which has a mirror surface.

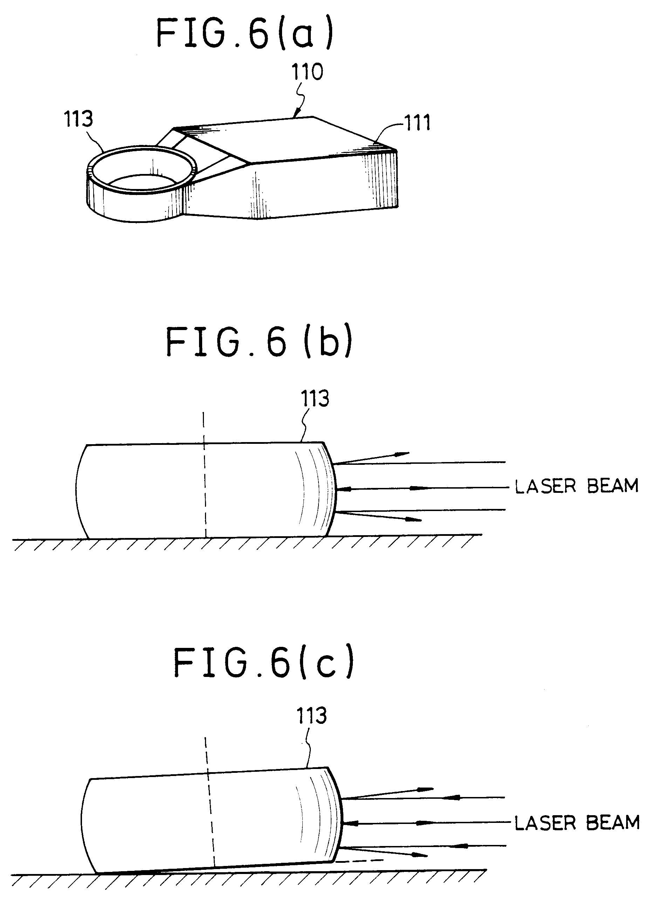

As shown in Fig. 6(a), the position indicator is constituted in such a manner that a mirror portion 113 is formed on one side surface of a box-like main body 111. The bottom surface of the main body 111 and the same of the mirror portion 113 are arranged to be capable of being retained in parallel to the plane XY. A display plate (omitted from illustration) made of transparent synthetic resin is attached to the bottom surface of the mirror portion 113, in which a hair cross mark showing the center of the mirror portion 113 is written. As shown in Figs. 6(b) and 6(c), the side external mirror of the mirror portion 113 is outward curved at the central portion thereof. As a result, even if the laser beam made incident upon the mirror portion 113 is not perpendicular to the center axis of the hair cross mark, a portion of the laser beams passing through the center axis of the hair cross mark can be reflected into the path of incident light.

The first rotary mirror 241 is designed such that the rotational axis thereof is positioned at the origin of the plane XY and is perpendicular to this XY plane. The second rotary mirror 242 is positioned on the X-axis and away from the first rotary mirror 241 by a predetermined distance L, for example 5 m, the rotational second rotary mirror 242 having its rotational axis perpendicular to the XY plane.

The half mirror 221 is disposed on the X-axis between the first rotary mirror 241 and the second rotary mirror 242 so as to reflect the laser beam from the laser 211 and to cause it to be incident upon the first rotary mirror 241 in parallel to the XY plane The half mirror 222 is disposed at a position which is clockwise turned by 90 degrees from the position of the half mirror 221 relative to the rotational axis of the first rotary mirror 241 so as reflect the laser beam from the laser 212 and to cause it to be incident upon the first rotary mirror 241 in parallel to the XY plane. The half mirror 223 is disposed at a position which is clockwise turned by 180 degrees from the position of the half mirror 221 relative to the rotational axis of the first rotary mirror 241 so as reflect the laser beam from the laser 213 and to cause it to be incident upon the first rotary mirror 241 in parallel to the XY plane. The half mirror 224 is disposed at a position which is clockwise turned by 270 degrees from the position of the half mirror 221 relative to the rotational axis of the first rotary mirror 241 so as reflect the laser beam from the laser 214 and to cause it to be incident upon the first rotary mirror 241 in parallel to the XY plane. The half mirror 225 is disposed on the X-axis between the half mirror 221 and the second rotary mirror 242 so as to reflect the laser beam from the laser 215 and to cause it to be incident upon the second rotary mirror 242 in parallel to the XY plane. The half mirror 226 disposed at a position which is counterclockwise turned by 90 degrees from the position of the half mirror 225 relative to the rotational axis of the second rotary mirror 242 so as reflect the laser beam from the laser 216 and to cause it to be incident upon the second rotary mirror 242 in parallel to the XY plane. The half mirror 227 is disposed at a position which is counterclockwise turned by 180 degrees from the position of the half mirror 225 relative to the rotational axis of the second rotary mirror 242 so as reflect the laser beam from the light source 217 and to cause it to be incident upon the second rotary mirror 242 in parallel to the XY plane. The half mirror 228 is disposed at a position which is counterclockwise turned by 270 degrees from the position of the half mirror 225 relative to the rotational axis of the second rotary mirror 242 so as reflect the laser beam from the laser 218 and to cause it to be incident upon the second rotary mirror 242 in parallel to the XY plane.

The photosensor 231 is disposed at a position at which laser beam emitted from the laser 211 and reflected by the first rotary mirror 241 at an incident angle of zero degree can be detected via the half mirror 221.

The photosensor 232 is disposed at a position at which laser beam emitted from the laser 212 and reflected by the first rotary mirror 241 at an incident angle of zero degree can be detected via the half mirror 222. The photosensor 233 is disposed at a position at which laser beam emitted from the laser 213 and reflected by the first rotary mirror 241 at an incident angle of zero degree can be detected via the half mirror 223. The photosensor 234 is disposed at a position at which laser beam emitted from the laser 214 and reflected by the first rotary mirror 241 at an incident angle of zero degree can be detected via the half mirror 224. The photosensor 235 is disposed at a position at which laser beam emitted from the laser 215 and reflected by the first rotary mirror 241 at an incident angle of zero degree can be detected via the half mirror 225. The photosensor 236 is disposed at a position at which laser beam emitted from the laser 216 and reflected by the first rotary mirror 241 at an incident angle of zero degree can be detected via the half mirror 226. The photosensor 237 is disposed at a position at which laser beam emitted from the laser 217 and reflected by the first rotary mirror 241 at an incident angle of zero degree can be detected via the half mirror 227. The photosensor 238 is disposed at a position at which laser beam emitted from the laser 218 and reflected by the first rotary mirror 241 at an incident angle of zero degree can be detected via the half mirror 228.

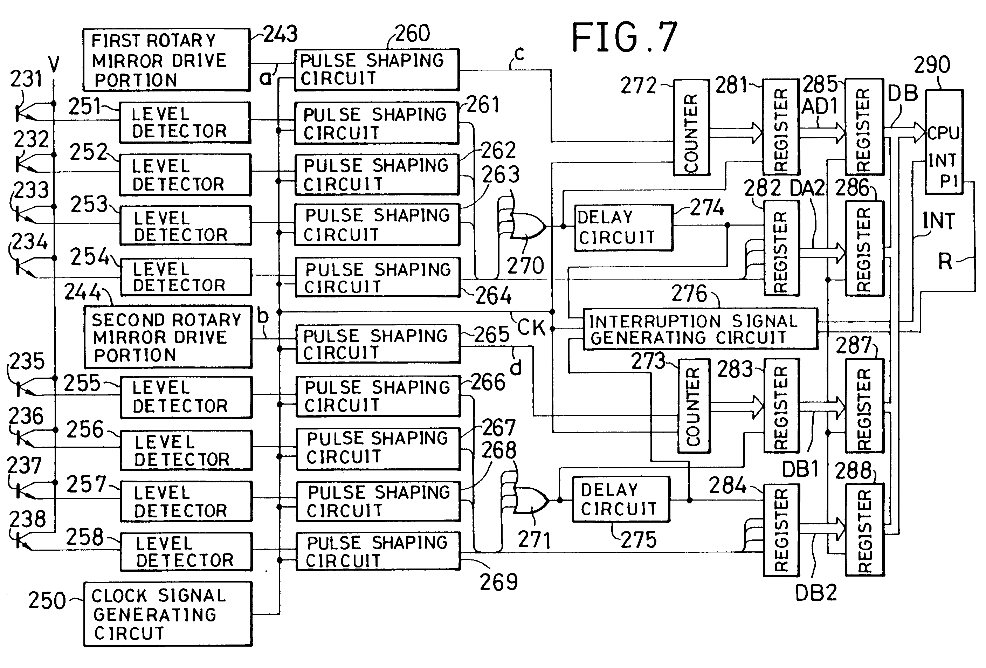

Fig. 7 is a block diagram of an electric circuit for use in the Fig 5 arrangement. Referring to Fig. 7, reference numeral 243 represents a first rotary mirror drive portion capable of counterclockwise rotating the first rotary mirror 241 shown in Fig. 5 at uniform angular velocity ω. The first rotary mirror drive portion 243 is also capable of transmitting pulse signal a of logic "1" having a predetermined pulse width T_{PW} when the normal line of the surface of the first rotary mirror 125 agrees with the path of the incident light beam emitted from the laser 211, the condition when they agree with each other being arranged to be the reference position. The pulse width T_{PW} of the pulse signal a is arranged to be shorter than time Tf which it takes the first rotary mirror 241 to complete one rotation. Reference numeral 244 represents a second rotary mirror drive portion capable of rotating the second rotary mirror 242 shown in Fig. 5 clockwise at uniform angular velocity ω. The second rotary mirror drive portion 244 is also capable of transmitting pulse signal b of logic "1" having a predetermined pulse width T_{PW} when the normal line of the surface of the second rotary mirror 242 agrees with the path of the incident light beam emitted from the laser 215, the condition when they agree with each other being arranged to be the reference position. The pulse width T_{PW} of the pulse signal b is arranged to be shorter than time Tf which it takes the second rotary mirror 242 to complete one rotation.

Reference numeral 250 represents a clock signal generating circuit capable of transmitting clock signal CK having a predetermined period T_{ck}.

Reference numerals 251 to 258 represent level detection circuits each of which is constituted by resistors and operation amplifiers. The level detection circuits 251 to 258 are capable of converting a photoelectric current transmitted from the emitter of the photosensors 231 to 238 into voltage. Furthermore, the level detection circuits 251 to 258 cause their output signals to be logic "1" when the thus converted voltage reaches a predetermined reference level.

Reference numerals 260 to 269 represent pulse shaping circuits each of which is similarly constituted by a flip-flop and a logical circuit and capable receiving the clock signal CK, detecting that the input signal has been changed from logic "0" to logic "1", and transmitting a pulse signal having the width of one clock pulse. The input of the pulse shaping circuit 260 is connected to the output of the first rotary mirror drive portion 243. The inputs of the pulse shaping circuits 261 to 264 are connected to the outputs of the level detection circuits 251 to 254. The input of the pulse shaping circuit 265 is connected to the output of the second rotary mirror drive portion 244. The inputs of the pulse shaping circuits 266 to 269 are connected to the outputs of the level detection circuits 255 to 258.

Reference numerals 270 and 271 represent OR circuits each of which has four inputs, the four inputs of the OR circuit 270 being connected to the outputs of the pulse shaping circuits 261 to 264. On the other hand, the four inputs of the OR circuit 271 are connected to the outputs of the pulse shaping circuits 266 to 269.

Reference numerals 272 and 273 represent counters each of which is arranged to be capable of conducting counting freely in response to the clock signal CK. The counter 272 is arranged to be reset in response to the pulse signal C transmitted from the pulse shaping circuit 260. The counter 273 is arranged to be reset in response to the pulse signal d transmitted from the pulse shaping circuit 265.

Reference numerals 274 and 275 represent delay circuits each of which is similarly constituted by a flip-flop and a logical circuit. The delay circuit 247 receives the output signal from the OR circuit 270 and the clock signal CK, and transmits the output signal from the OR circuit 270 delayed by one clock. The delay circuit 275 receivess the output signal from the OR circuit 271 and the clock signal CK, and transmits the output signal from the OR circuit 271 delayed by one clock.

Reference numeral 276 represents an interruption signal generating circuit constituted by a flip-flop and a logical circuit and capable of receiving the output signals from the delay circuits 274 and 275 and the clock signal CK. The interruption signal generating circuit 276 is further capable of transmitting interruption signal INT to a CPU 290 to be described later after it has caused the interruption signal INT to be logic "1" on condition that either of the pulse signals from the delay circuits 274 or 275 is inputted and then the other pulse signal is inputted or condition that both the pulse signals are inputted. In addition, the interruption signal generating circuit 276 causes the interruption signal INT to be logic "0" under condition that pulse reset signal R of logic "1" is inputted thereto from the CPU 290.

Reference numerals 281 and 282 represent registers, the input of the register 281 being connected to the output of the counter 272 so as to latch output data from the counter 272 as first angular data DA1 in response to the pulse signal transmitted from the OR circuit 270. The outputs of the pulse shaping circuits 261 to 264 are connected to the lower 4 bits of the input of the register 282 so as to be registered as first detection data DA2 in response to the pulse signal transmitted from the delay circuit 274. That is, the output of the pulse shaping circuit 261 is connected to input LSB of the register 282, the output of the pulse shaping circuit 262 is connected to input 2LSB, the output of the pulse shaping circuit 263 is connected to input 3LSB, and the output of the pulse shaping circuit 264 is connected to input 4LSB. The input of the register 283 is connected to the output of the counter 273 so that output data from the counter 273 is registered as second angular data DB1 in the register 283 in response to the pulse signal transmitted from the OR circuit 271 The outputs of the pulse shaping circuits 266 to 269 are connected to the lower 4 bits of the input of the register 284 so as to be registered as second detection data DB2 in response to the pulse signal transmitted from the delay circuit 275. That is, the output of the pulse shaping circuit 266 is connected to input LSB of the register 284, the output of the pulse shaping circuit 267 is connected to input 2LSB, the output of the pulse shaping circuit 268 is connected to input 3LSB, and the output of the pulse shaping circuit 268 is connected to input 4LSB. The registers 285 to 288 are tri-state output type registers having the inputs connected to the outputs of the registers 281 to 284 so that output data from the registers 281 to 284 are latched by the registers 285 to 288 when the interruption signal is changed from logic "0" to logic "1".

Reference numeral 290 represents a CPU connected to the outputs of the registers 285 to 288 via a data bus DB so as to input data registered in the registers 285 to 288 when the interruption signal INT becomes logic "1". After data has been inputted, the CPU 290 transmits pulse reset signal R of logic "1" to the output port P1.

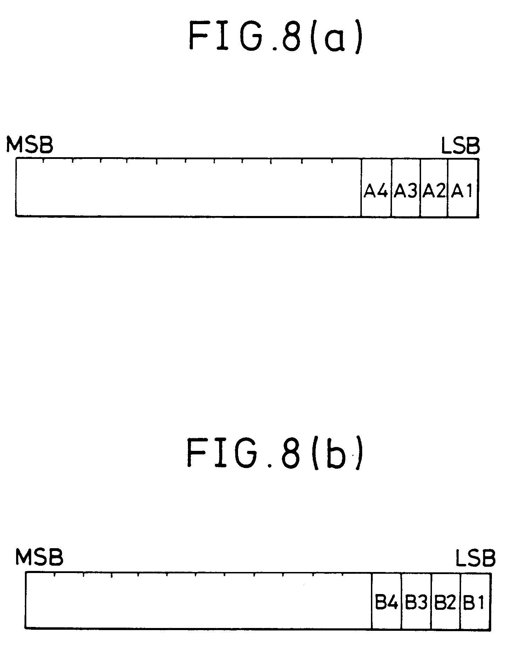

Figs. 8(a) and 8(b) are views which illustrate formats of the first and second detection data DA2 and DB2. Referring to the drawings, the fact that bit A1 is logic "1" indicates that reflected light is detected by the photosensor 231, the fact that bit A2 is logic "1" indicates that reflected light is detected by the photosensor 232, the fact that bit A3 is logic "1" indicates that reflected light is detected by the photosensor 233, and the fact that bit A4 is logic "1" indicates that reflected light is detected by the photosensor 234. Furthermore, the fact that bit B1 is logic "1" indicates that reflected light is detected by the photosensor 235, the fact that bit B2 is logic "1" indicates that reflected light is detected by the photosensor 236, the fact that bit B3 is logic "1" indicates that reflected light is detected by the photosensor 237, and the fact that bit B4 is logic "1" indicates that reflected light is detected by the photosensor 238.

The above-described angle detection means comprises the first and second rotary mirror drive portions 243 and 244, the clock signal generating circuit 250, the pulse shaping circuits 260 and 265, and the counters 272 and 273. The coordinate arithmetic means comprises the clock signal generating circuit 250, the level detection circuits 251 to 258, the pulse shaping circuits 261 to 264 and 266 to 269, the OR circuits 270 and 271, the delay circuit 274 and 275, the interruption signal generating circuit 276, the registers 281 to 288, the CPU 290, and a program, to be described later, capable of operating the CPU 290.

The other structure is the same as that of the above-described arrangements.

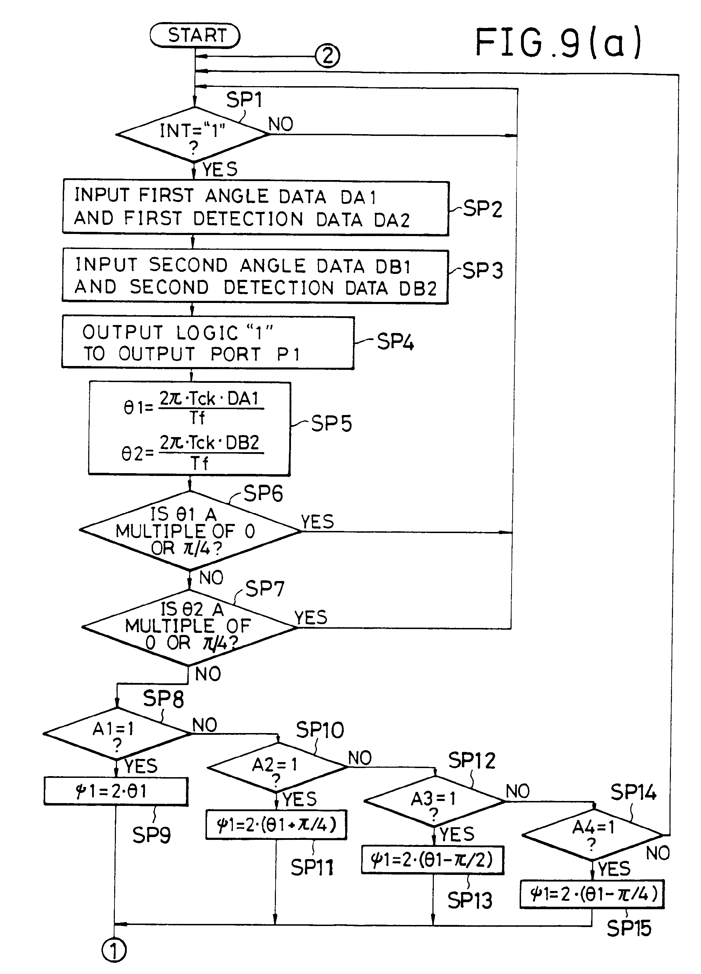

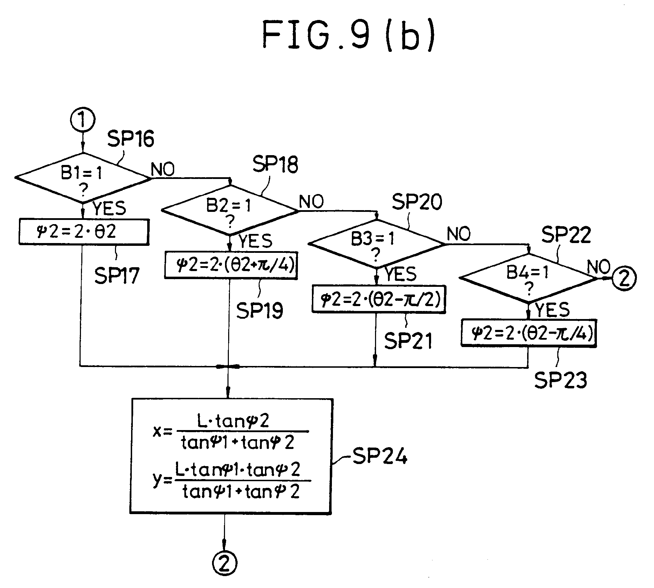

Then, the operation of the Fig. 5 arrangement will be described with reference to a flow chart for the program shown in Fig. 9.

Description will be made considering a case in which the position of point P₀ is inputted on the plane XY. The position indicator is moved over the plane XY so as to position the center of the hair cross mark of the mirror portion 113 at point P₀.

After the laser beam emitted from any of the lasers 211 to 214 has passed toward the central axis of the hair cross mark of the mirror portion 113 of the position indicator 110 via specific point P₁ of the first rotary mirror 241, the laser beam reflected by the mirror portion 113 is made incident upon the photosensor which corresponds to the laser via the first rotary mirror 241. At this time, the photoelectric current transmitted from the corresponding photosensor increases, causing the output signal from the level detection circuit which corresponds to this photosensor to become logic "1". As a result, a pulse signal is transmitted from the pulse shaping circuit which corresponds to this level detection circuit. In response to the pulse signal thus transmitted, first angular data DA1 from the counter 272 and representing the angle ϑ1 of the normal line of the first rotary mirror 241 with respect to the above-described reference position is latched by the register 281. Furthermore, the first detection data DA2, determining which one of the photosensor 231 to 234 has detected reflected light, is latched by the register 282.

After the laser beam emitted from any of the lasers 215 to 218 has passed toward the central axis of the mirror portion 113 of the position indicator 110 via specific point P2 of the second rotary mirror 242, the light beam reflected by the mirror portion 113 is made incident upon the photosensor which corresponds to this via the second rotary mirror 242. As a result, the second angular data DB1 from the counter 273 and representing the angle of the normal line of the second rotary mirror 242 with respect to the above-described reference position is, similarly to the description above, latched by the register 283 Furthermore, the second angular data DB2 is latched by the register 284.

When the first and second angular data DA1 and DB1 and the first and second detection data DA2 and DB2 are latched by the registers 281 to 284, the interruption signal INT becomes logic "1" and the fist and second angular data DA1 and DB1 and the first and second detection data DA2 and DB2 are registered by the registers 285 and 288. As a result, data are protected against being updated before or during the reading of data performed by the CPU 290.

The CPU 290 always supervises whether or not the interruption signal INT is logic "1" (SP1). When the interruption signal INT becomes logic "1" (SP2), the CPU 290 receivess the first angular data DA1 and the second detection data DA2 from the registers 285 and 286 via the data bus DB (SP2), and receivess second angular data DB1 and the second detection data DB2 (SP3). Then, the CPU 290 transmits a signal of logic "1" to the output port P1 for a predetermined time period (SP4).

The CPU 290 calculates rotational angles ϑ1 and ϑ2 of the first and second rotary mirrors 241 and 242 by using the first and second angular data DA1 and DB1 in accordance with the following equation (SP5).$\text{ϑ1 = 2π · Tck · DA1/Tf (radian)}$$\text{ϑ2 = 2π · Tck · DB1/Tf (radian)}$
where symbol Tck represent the period of the clock signal CK, Tf represents the time it takes the first and second rotary mirror 241 and 242 to complete one rotation, which are previously stored in the program as constants.

Then, it is determined whether or not the rotational angle ϑ1 of the rotary mirror 241 is 0 or an integer multiple of π/4 (SP6). That is, it is determined whether or not reflected light detected from the photosensor is light reflected by the position indicator 110. If it is determined that the rotational angle ϑ1 is 0 or a multiple of π/4, the flow returns to SP1. If the rotational angle ϑ1 is not 0 or a multiple of π/4, it is determined whether or not the rotational angle ϑ2 of the second rotary mirror 242 is 0 or a multiple π/4 (SP7). If it is determined that the rotational angle ϑ2 is 0 or a multiple of π/4, the flow returns to SP1. If it is determined that the rotational angle ϑ2 is not 0 or a multiple of π/4, it is determined whether or not bit A1 of the first detection data DA2 is 1 (SP8). If it is determined that A1 = 0, the flow advances to SP10. If it is determined that A1 = 1, angle φ1 made between the light from the position indicator 110 and reflected by the rotary mirror 241 and X-axis is calculated in accordance with the following equation (SP9), and the flow advances to SP16.$\text{φ1 = 2 · ϑ1}$

If it is determined A1 = 0 in step SP8, it is determined whether or not bit A2 is 1 (SP10). If it is determined that A2 = 0, the flow shifts to SP12. If it is determined that A2 = 1, angle φ1 is calculated in accordance with the following equation (SP11), and then the flow shifts to SP16.$\text{φ1 = 2 · (ϑ1 + π/4)}$

If it is determined that A2 = 0 in SP 10, it is determined whether or not bit A3 is 1 (SP12). If it is determined that A3 = 0, the flow shifts to SP14. If it is determined that A3 = 1, angle φ1 is calculated in accordance with the following equation (SP13), and then the flow shifts to SP16.$\text{φ1 = 2 · (ϑ1 - π/2)}$

If it is determined that A3 = 0 in SP12, it is determined whether or not bit A is 1 (SP14). If it is determined that A4 = 0, the flow returns to SP1. If it is determined that A4 = 1, angle φ1 is calculated in accordance with the following equation (SP15), and the flow shifts to SP16.$\text{φ1 = 2 · (ϑ1 - π/4)}$

Then, it is determined that bit B1 of the second detection data DB2 is 1 (SP16). If it is determined that B1 = 0, the flow shifts to SP 18. If it is determined that B1 = 1, angle φ2 made between the light from the position indicator 110 and reflected by the rotary mirror 242 and X-axis is calculated in accordance with the following equation (SP17), and the flow advances to SP24.$\text{φ2 = 2 · ϑ2}$

If it is determined that B1 = 0, it is determined whether or not bit B2 is 1 (SP18). If it is determined that B2 =0, the flow shifts to SP20. If it is determined that B2 = 1, angle φ2 is calculated in accordance with the following equation (SP19), and then the flow shifts to SP24.$\text{φ2 = 2 · (ϑ2 + π/4)}$

If it is determined that B2 = 0 in SP18, if is determined whether or not bit B3 is 1 (SP20). If it is determined that B3 = 0, the flow shifts to SP22. If it is determined that B3 = 1, angle φ2 is calculated in accordance with the following equation (SP21), and then the flow shifts to SP24.$\text{φ2 = 2 · (ϑ2 - π/2)}$

If it is determined that B3 = 0 in SP20, it is determined whether or not bit B4 is 1 (SP22). If it is determined that B4 = 0, the flow returns to SP1. If it is determined that B4 = 1, angle φ2 is calculated in accordance with the following equation (SP23), and then the flow shifts to SP24.$\text{φ2 = 2 · (ϑ2 - π/4)}$

Then, X-coordinate and Y-coordinate of point P₀ are calculated by using angles φ1 and φ2 in accordance with the following equation (SP24).$\text{x = L · tan φ2/(tan φ1 + tan φ2)}$$\text{y = L · tan φ1 · tan φ2/(tan φ1 + tan φ2)}$
where symbol L represents the distance between the fist rotary mirror 241 and the second rotary mirror 242 and is previously stored in the program.

After X-coordinate and Y-coordinate have been obtained, the flow shifts to SP1.

According to the Fig. 5 arrangement, 8 lasers are used so as to serve as light source. Another structure may be employed which is arranged such that one laser is used and laser beam emitted from the laser according to another structure is made incident upon the first and second rotary mirrors 241 and 242 from a plurality of angles by using a half mirror, a mirror or the like.

According to the Fig. 5 arrangement, although rotary mirrors each of which has a mirror surface are employed as the first and second rotary mirrors 242 and 242, rotary mirrors each of which has a plurality of mirror surfaces may be employed. In this case, further accurate coordinates can be obtained since the intervals of the detections of the coordinates can be reduced by conducting calculations arranged to correspond to the polygon mirrors.

According to the Fig. 5 arrangement, the structure is arranged such that laser beams are made incident upon the first and second rotary mirrors 241 and 242 respectively from four directions. The intervals of the detection of coordinates can be further shortened by employing a structure arranged such that laser beams are made incident from larger number of directions.

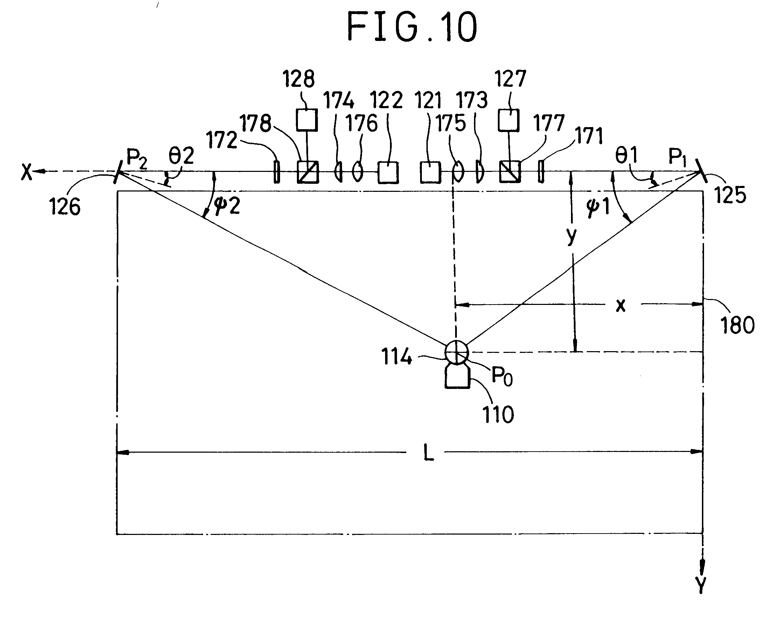

Fig. 10 is a view which illustrates another arrangement of an optical system which is not an embodiment but is useful for under standing the invention. Referring to the drawing, the same components as those according to the Fig. 1(b) arrangement are given the same reference numerals. That is, reference numeral 110 represents the position indicator, 121 and 122 represent lasers, 125 and 126 represent first and second rotary mirrors, 127 and 128 represent the first and second photosensors, 171 and 172 represent quarter wavelength plates, 173 and 174 represent cylindrical lenses, 175 and 176 represent lenses, 177 and 178 represent polarizing beam splitters, 180 represent coordinate input region.

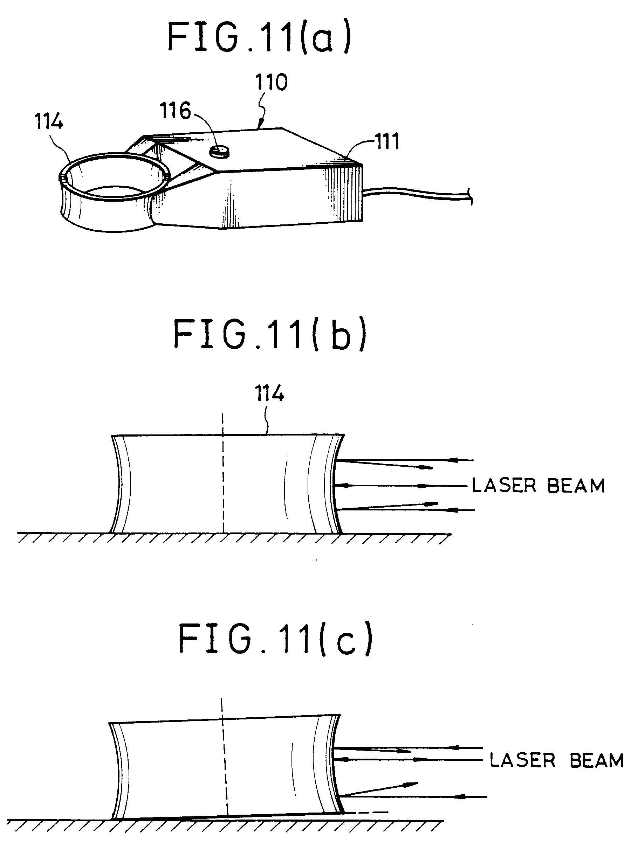

As shown in Fig. 11(a), the position indicator 110 is constituted in such a manner that a mirror portion 114 is disposed on one side surface of a box-like main body 111, the bottom portion of the main body 111 and the same of the mirror portion 114 being arranged such that they can be held in parallel to plane XY. A transparent display plate (omitted from illustration) made of synthetic resin is attached to the above-described bottom surface of the mirror portion 114. A hair-cross mark showing the center of the mirror portion 114 is provided on the above-described display plate. As shown in Figs. 11(b) and 11(c), the side external mirror of the mirror portion 114 is inwardly curved at the central portion thereof. As a result, even if the laser beam made incident upon the mirror portion 114 is not perpendicular to the center axis of the hair cross mark, a portion of the laser beams passing through the center axis of the hair cross mark can be reflected into the path of incident light. A coordinate calculation instruction signal generating circuit 115, to be described later, is provided in the main body 111. The coordinate calculation instruction signal generating circuit 115 is connected to a switch 116 disposed on the outer surface of the main body 111 and to an electric circuit to be described later so that when the switch 116 is switched on the coordinate calculation instruction signal generating circuit 115 generates a command signal.

Each of the lasers 121 and 122 comprises a semiconductor laser. The structure is arranged in such a manner that the laser beam emitted by the laser 121 is made incident upon the polarizing beam splitter 177 disposed on X-axis in parallel to plane XY via the lens 175 and the cylindrical lens 173. The laser beam which has passed through the polarizing beam splitter 177 is made incident upon the rotational axis of the first rotary mirror 125 in parallel to plane XY via the quarter wavelength plate 171. On the other hand, the laser beam emitted by the laser 122 is made incident upon the polarizing beam splitter 178 disposed on X-axis in parallel to plane XY via the lens 176 and the cylindrical lens 174. The laser beam which has passed through the polarizing beam splitter 178 is made incident upon the rotational axis of the first rotary mirror 126 in parallel to plane XY via the quarter wavelength plate 172.

The lens 175 is a lens arranged to have such a focal length that laser beams, which have been reflected by, for example, specific point P₁ of the first rotary mirror 125, focused at the center of the coordinate input region 180 on the plane XY. The lens 176 is a lens arranged to have such a focal length having laser beams, which have been reflected by, for example, specific point P₂ of the second rotary mirror 126, are focused at the center of the coordinate input region 180 on the plane XY. Thus, the laser beams emitted from the lasers 121 an 122 are stopped by the lenses 175 and 176. As a result, the intensity of the laser beam made incident upon the photosensors 127 and 128 after the laser beam has been reflected by the mirror portion 114 is strengthened, and irregular reflection of laser beams caused from the mirror portion 114 is prevented.

The cylindrical lenses 173 and 174 are disposed so as to cause the laser beams emitted from the lasers 121 and 122 to form band-like shapes and so as to cause the plane of the laser beams to be perpendicular to plane XY. The laser beams which do not pass through the center axis of the mirror portion 114 are reduced and irregular reflection of the laser beams caused from the mirror portion 114 is prevented by making the laser beams in the form of a band-like shape and perpendicular to the plane XY.

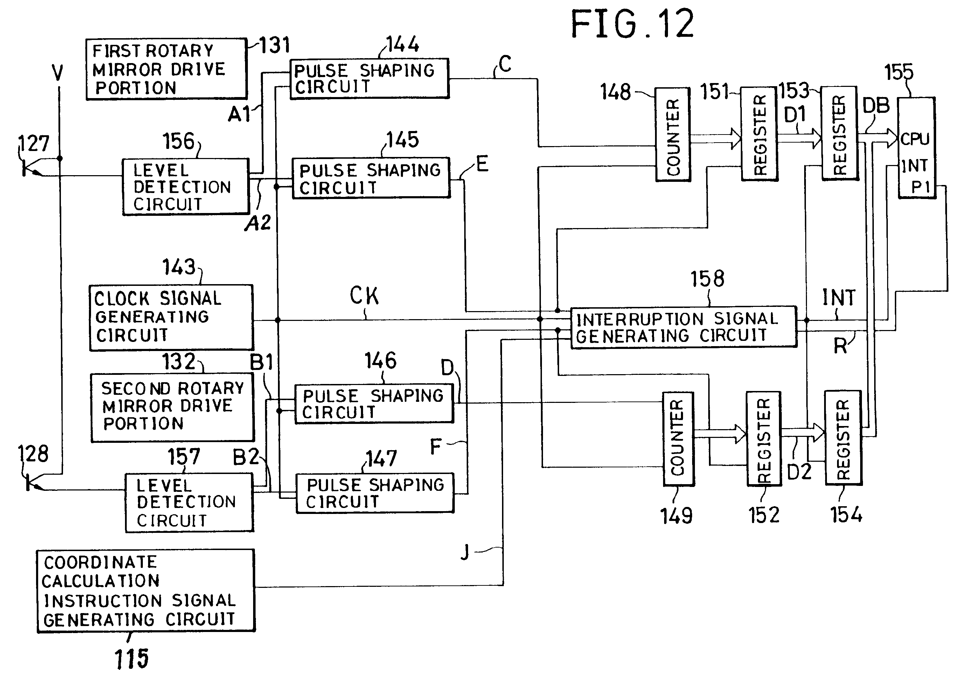

Fig. 12 is a block diagram of the electric circuit for use in the Fig. 10 arrangement. The same components as those according to the Fig. 3 arrangement are given the same reference numerals. The difference from the Fig. 3 arrangement lies in that the above-described coordinate calculation instruction signal generating circuit 115 is further provided, and in the structure of the level detection circuits 156 and 157 and the interruption signal generating circuit 158.

The coordinate calculation instruction signal generating circuit 115 is capable of transmitting coordinate calculation instruction signal J of logic "1" when the switch 116 is switched on.

The level detection circuits 156 and 157 are structured similarly to each other and each comprise a resistor and an operation amplifier The level detection circuit 156 converts an photoelectric current transmitted from the emitter of the first photosensor 127 into voltage Vₚₕ₁, the voltage Vₚₕ₁ being then subjected to comparison with first and second detection reference levels Vₜₕ₁ and Vₜₕ₂ so as to transmit signals A1 and A2. If Vₜₕ₂ < Vₜₕ₁ and also Vₜₕ₁ ≦ Vₚₕ₁, signal A1 of logic "1" is transmitted to the pulse shaping circuit 144. If Vₜₕ₂ ≦ Vₚₕ₁ < Vₜₕ₁, signal A2 of logic "1" is transmitted to the pulse shaping circuit 145. Similarly, the level detection circuit 157 converts an photoelectric current transmitted from the emitter of the second photosensor 128 into voltage Vₚₕ₂, the voltage Vₚₕ₂ being then subjected to comparison with first and second detection reference levels Vₜₕ₁ and Vₜₕ₂ so as to transmit signals B1 and B2. If Vₜₕ₁ ≦ Vₚₕ₁, signal B1 of logic "1" is transmitted to the pulse shaping circuit 146. If Vₜₕ₂ ≦ Vₚₕ₁ < Vₜₕ₁, signal B2 of logic "1" is transmitted to the pulse shaping circuit 147.

The pulse shaping circuit 144 receives signal A1 and clock signal CK so as to transmit signal C. The pulse shaping circuit 145 receives signal A2 and clock signal CK so as to transmit signal E. The pulse shaping circuit 146 receives signal B1 and clock signal CK so as to transmit signal D. The pulse shaping circuit 147 receives signal B2 and clock signal CK so as to transmit signal F.

The interruption signal generating circuit 158 is constituted by a flip-flop and a logical circuit and capable of receiving the output signals E and F from the pulse shaping circuits 145 and 147, the coordinate calculation instruction signal J, and the clock signal CK. The interruption signal generating circuit 158 is capable of transmitting interruption signal INT. The interruption signal generating circuit 158 is further capable of transmitting interruption signal INT to a CPU 155 to be described later after it has caused the interruption signal INT to be logic "1" on condition that the logic value of the coordinate calculation instruction signal J is "1" and either the pulse signal E or F is inputted and then the other pulse signal is inputted or on condition that the logic value of the coordinate calculation instruction signal J is "1" and both the pulse signals E and F are simultaneously inputted. In addition, the interruption signal generating circuit 158 causes the interruption signal INT to be logic "0" under condition that pulse reset signal R of logic "1" is inputted thereto from the CPU 155.

Then, the operation of the Fig. 10 arrangement will be described.

Description will be made considering a case in which the position of point P₀ in the coordinate input region 180 shown in Fig. 10 is inputted. First, the position indicator 110 is moved so as to cause the center of the hair cross mark of the mirror portion 114 to agree with point P₀, and then the switch 116 is switched on.

The laser beam emitted from the laser 121 is made incident upon the polarizing beam splitter 177 via the lens 175 and the cylindrical lens 173. If the incidental laser beam is, for example, non-polarizing light, a laser beam having a polarizing plane in a predetermined direction is made incident upon the first rotary mirror 125 after it has passed through the polarizing beam splitter 177 and the quarter wavelength plate 171. In the case where the laser beam is perpendicularly made incident upon the surface of the first rotary mirror 125, the reflected light is made incident upon the polarizing beam splitter 177 after passing through the quarter wavelength plate 171 on the same optical passage as that through which the incidental light beam passes. At this time, light reflected by the first rotary mirror 125 is caused to be a linear polarized light whose polarized plane is different from incidental light by 90 degrees due to the quarter wavelength plate 171, the liner polarized light being then reflected by the polarizing beam splitter 177 so as to be made incident upon the photosensor 127. The laser beam reflected by the mirror portion 114 of the position indicator 110 is similarly detected by the photosensor 127.

Similarly, laser beam emitted from the laser 122 and directly reflected by the second rotary mirror 126 and also reflected light by the mirror portion 114 of the position indicator 110 are detected by the second photosensor 128.

It is not necessary for the laser beams emitted from the lasers 121 and 122 to be non-polarized light. They may, of course, be laser beams having polarized planes and thereby being transmissible through the polarizing beam splitters 177 and 178.

When reflected light is made incident upon the first photosensor 127, the transmitted photoelectric current is increased. However, since this increase is based on the intensity of light, the degree of increase in the photoelectric current is higher in light directly reflected by the first rotary mirror 125 than in light reflected by the mirror portion 114 of the position indicator 110 by virtue of stronger light intensity due to the reduced degree of light scattering or the like. Similarly, the direct reflected light by the second rotary mirror 126 and reflected light by the mirror portion 114 of the position indicator 110 show the difference that light directly reflected by the second rotary mirror 126 shows stronger light intensity.

The first detection reference level Vₜₕ₁ is determined with which light directly reflected by the first and second rotary mirrors 125 and 126 can be detected, while the second detection reference level Vₜₕ₂ is determined with which light reflected by the mirror portion 114 of the position indicator 110 can be detected.

When the first photosensor 127 detects light directly reflected by the first rotary mirror 125, the counter 148 is reset by the signal C transmitted from the pulse shaping circuit 144. When the same detects light reflected by the mirror portion 114 of the position indicator 110, output data from the counter 148 is latched by the register 151 by the signal E transmitted from the pulse shaping circuit 145 so as to be registered as angular data D1 representing incidental angle ϑ1 of the laser beam to be made incident upon the first rotary mirror 125.

When the second photosensor 128 detects light directly reflected by the second rotary mirror 126, the counter 149 is reset by the signal D transmitted from the pulse shaping circuit 146. When the same detects light reflected by the mirror portion 114 of the position indicator 110, output data from the counter 149 is latched by the register 152 by the signal F transmitted from the pulse shaping circuit 147 so as to be registered as angular data D2 representing incidental angle ϑ2 of the laser beam to be made incident upon the second rotary mirror 126. Furthermore, angular data D1 and D2 are latched by the registers 153 and 154 by the interruption signal INT.

The CPU 155 conducts the processings similarly to the Fig. 3 arrangement, X-coordinate and Y-coordinate of point P0 instructed by the position indicator 110 being thus calculated.

According to the Fig. 10 arrangement, although rotary mirrors each of which has a mirror surface are employed as the first and second rotary mirrors 125 and 126, rotary mirrors each of which has a plurality of mirror surfaces may be employed. In this case, more accurate coordinates can be obtained since the intervals of the detections of the coordinates can be reduced by conducting calculations arranged to correspond to the polygon mirrors.

Although the coordinate calculation instruction signal J is supplied to the interruption signal generating circuit 158 via a cable in the Fig. 12 arrangement, it may be transmitted by means of ultrasonic waves or infrared rays.

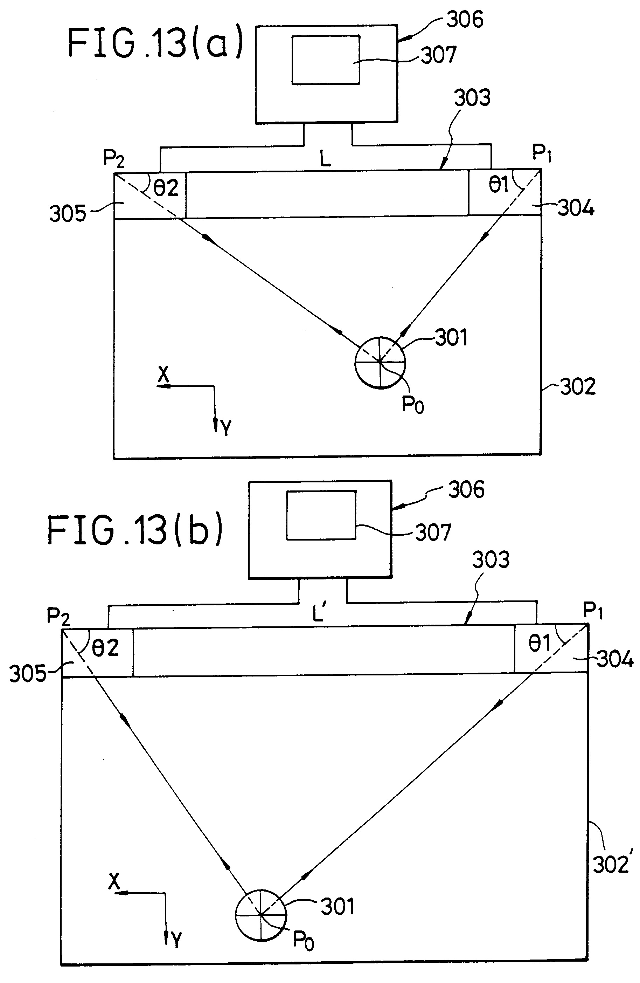

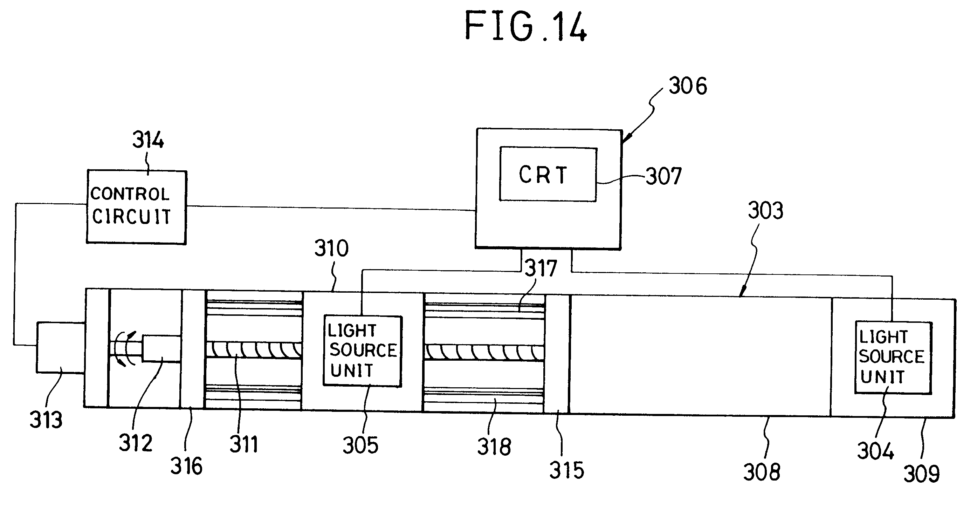

Figs. 13(a), 13(b), and 14 are views which illustrate a first embodiment of the present invention. The structure of this embodiment is the same as the above-described arrangements. This embodiment is characterized in that the pair of light source units can be adjusted in accordance with the area of the coordinate input region.

Fig. 13(a) is a view which illustrates the case in which this embodiment is applied to a relatively narrow coordinate plane, in which the coordinate input apparatus according to the present invention is in a state where the distance between the pair of light sources is relatively short.

Fig. 13(b) is a view which illustrates the case in which this embodiment is applied to a relatively wide coordinate plane, in which the coordinate input apparatus according to the present invention is in a state where the distance between the pair of light sources is relatively long. That is, a coordinate plane 302′ shown in Fig. 13(b) has a larger size than that of a coordinate plane 302 shown in Fig. 13(a), and distance L′ between specific points P₁ and P₂ is arranged to be longer than that of the coordinate plate 302. The distance L′ can be manually or automatically specified by relatively moving the right and left light sources along the reference line.

Fig. 14 is a front elevational view which illustrates a light source portion of the coordinate input apparatus according to the first embodiment. A light source portion 303 comprises a lengthened base member 308 for defining the reference line, a fixed light source unit 304 secured, via a fixed table 309, to the right end portion of the base member 308, and a movable light source unit 305 mounted on a movable table 310 which is capable of moving along the reference line. The movable light source portion 303 includes a drive mechanism for automatically moving the movable light source unit 305. The drive mechanism comprises a ball screw or a lead screw 311 inserting into the movable table 310 on which the movable light source unit 305 is mounted, an electric motor such as a stepping motor which is coupled, via a coupling 312, to the lead screw 312 for the purpose of rotating the lead screw 312, and a control circuit 314 capable of controlling the rotation of the electric motor 313 so as to determine the distance L between the specific points P₁ and P₂. The control circuit 314 is connected to a calculating portion 306 so that the control circuit 314 automatically controls the rotation of the stepping motor 313 and thereby relatively, with respect to the fixed light source 304, moves the movable light source unit 305 mounted on the movable table 310 via the lead screw 311 by inputting the value of L which corresponds to the specified coordinate plane to the calculating portion 306. The output terminals of the pair of light source units 304 and 305 are connected to the calculating portion 306 via cables.

The lead screw 311 is borne by a pair of fixed plates 315 and 316 which are disposed away from each other. The movable table 310 is supported by a pair of guide rails 317 and 318 so as to be capable of moving along the reference line.

The calculating portion 306 includes a CPU so as to calculate, similarly to the above-described arrangements, the coordinate instructed by the position indicator (cursor) 301 in accordance with the angular data ϑ1 and ϑ2 obtained similarly to those obtained according to the above-described arrangements and data L representing the distance between two points, the data L being previously inputted. A CRT 307 or an electronic OHP using transmission type liquid crystal display elements is connected to the CPU so as to visually display the results of the calculations. The motor control circuit 314 is also connected to the CPU so as to control the operation of the stepping motor 313 of the light source portion 303 in accordance with data L which has been previously inputted to the CPU.

Then, the operation of the optical coordinate input apparatus according to this embodiment will be described. As shown in Figs. 13(a) or 13(b), the light source portion 303 is positioned on the surface of the top of the input coordinate plane given. Then, the distance L (the distance between a pair of specific points P₁ and P₂) between the pair of light source units 304 and 305 is inputted to the CPU of the calculating portion 306 in accordance with the size of the input coordinate plane. In accordance with the value L thus inputted, the motor control circuit 314 rotates the stepping motor 313 of the light source portion 303 by a predetermined degree so as to move the movable light source unit 305 along the reference line. As a result, the distance from the movable light source unit 305 to the fixed light source unit 304 is coincided with the specified value L.

Then, a light reflection type cursor 1 is disposed on the given coordinate plane 302, and the center axis thereof is caused to agree with a desired coordinate P₀ (x, y) by using a collimeter. The coordinate instruction by using the cursor 301 can be conducted continuously since the angularly scanning speed of the incident light is conducted at high speed.

Then, the pair of the light source units 304 and 305 are operated so as to angularly scan the incident line and calculate the coordinate P0 (x, y) by conducting a triangulation.

According to this embodiment, the distance between the pair of the light source units is automatically determined in accordance with the size of the given coordinate input plane by using the stepping motor and the lead screw. However, the distance L between the light source units can be manually adjusted. In this case, the structure is so arranged that the movable light source unit is simply moved along the guide rails. After the distance has been specified manually, the calculation and input of the value L are conducted as follows: first, the cursor is disposed at a predetermined point, and ϑ1 and ϑ2 are obtained by scanning the incident light. Then, with the cursor moved from the predetermined point to another point of which the distance to the first point is known, the incident light is scanned so as to obtain ϑ1 and ϑ2. By using the thus obtained data ϑ1, ϑ2, ϑ1′, ϑ2′, and D, an inverse operation of the triangulation so as to obtain the distance L between the specific points P₁ and P₂. Then, coordinate inputs with the light reflection type cursor are conducted by using the value L thus obtained.

The above-described optical structure of the optical unit serves as only examples. A variety of modifications can be available. Furthermore, the light reflection type cursor may also be modified variously. In addition, the moving structure of the movable optical portion is, of course, modified variously.

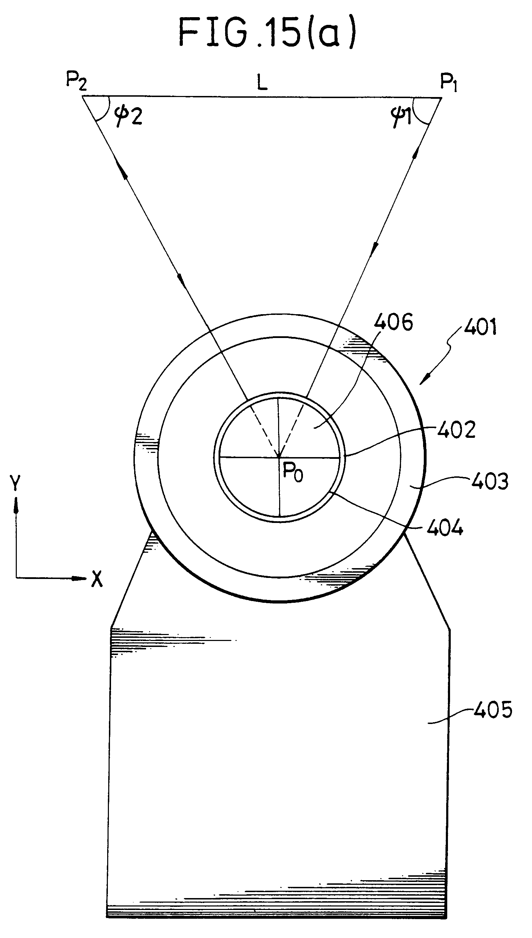

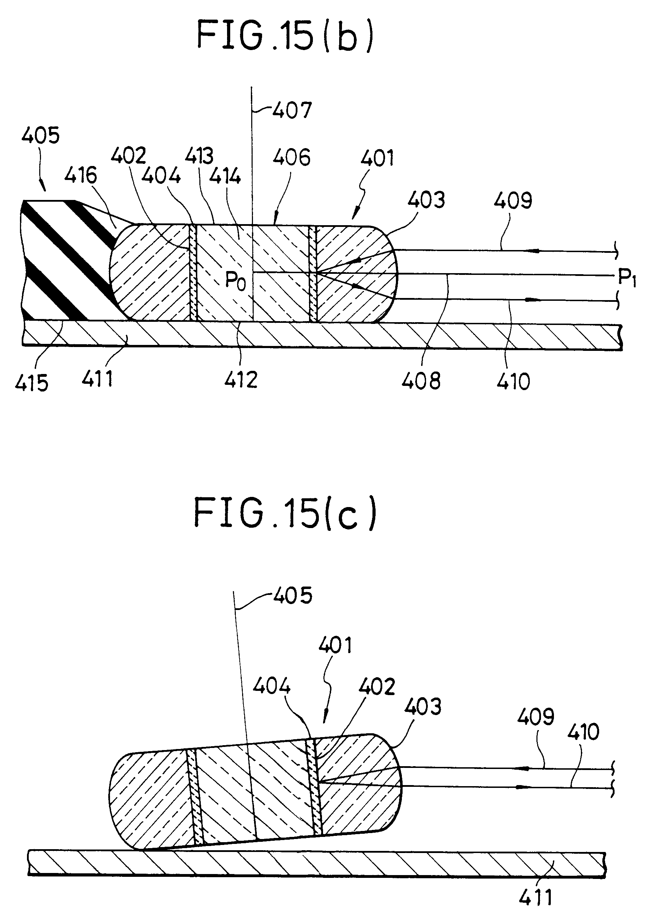

Figs. 15(a), 15(b), an 15(c) are views which illustrate an embodiment of the position indicator (the cursor). This embodiment is characterized by a function realized such that the incident light passing toward the center axis of the cursor, which represents the position of the cursor, is selectively reflected so as to return reflected light to the light source. Furthermore, another function is effective when the cursor is put on a plane and is manually and continuously moved so as to conduct continuous coordinate inputs, the function being such that reflected light can be kept within the incidental optical passage even if the cursor is inclined with respect to the coordinate plane during its moving.

Fig. 15(a) is a plan view which illustrates an light reflection type cursor according to this embodiment. An annular lens member 401 having concentric inner surface 402 and an outer surface 403 is made of an optical material, for example, high refraction factor glass SLF-03 having a refraction factor of 1.83. A light reflection layer 404 is formed along the inner surface 402. The light reflection layer 404 is manufactured by evaporating metal such as aluminum or metal foil. The annular lens member 401 is supported by a support member 405 at the non-effective outer surface thereof and is arranged to be capable of moving along the coordinate plate with the concentric axis retained with respect to the given plane XY. At the central portion of the annular lens member 401, there is provided a collimating member 406 capable of coinciding central point P1, through which the concentric axis passes, with a specific point on the plane XY. The collimating member 406 has a hair cross line to be used for collimating.

Fig. 15 (b) is a cross sectional view which illustrates the cursor shown in Fig. 14 (a) in such a manner that the same is cross-sectioned by a plane including a line connecting the concentric axis of the annular lens member 401, central point P0, and one of the light source P₁. The cross cut shape of the inner surface 402 of the annular lens member 401 is parallel to the concentric axis 407. The cross cut shape of the outer surface 403 is ground so as to be curved outward with a predetermined curvature. Thus, the outer surface 403 constitutes a lens surface having an optical axis which is along the radial direction of the annular shape, the curvature of the outer surface being determined so as to cause the focal point of the lens to be positioned on the inner surface 402. It is preferable that the annular lens member 401 be made of a high refraction factor in order to reduce the thickness of the portion between the outer surface 403 and the inner surface 402 and to reduce the size of the cursor. Incident light 409 from a distant light source P₁ is reflected by the reflection layer 404, and it is emitted as reflected light 410.

The collimating member 406 disposed at the central portion of the annular lens member 401 is made of, for example, a fiber optic plate. That is, the collimating member 406 comprises a bottom portion 412 positioned in contact with a XY plane 411, a upper surface 413 which is in parallel to the bottom portion 412, a parallel bundle of the optical fibers for connecting the bottom portion 412 and the upper surface 413, and a hair cross line mark corresponding to central point P₀. The support member 405 comprises a bottom portion 415 which is positioned which is slidable with respect to the coordinate plane 411, and a fixing portion 416 for securing the non-effective outer surface of the annular lens member 401 such that the concentric axis 407 of the lens member 401 is perpendicular to the bottom portion 415.

The way of usage of the cursor according to this embodiment will be described with reference to Figs. 15(a) and 15(b). When the support member 405 of the cursor is held on a predetermined position on the plane XY, the central point of the cursor, that is, the central point P₀ of the annular lens member 401 is coincided with a desired specific point for input by using the collimating member 406. Since the collimating member 406 is, as described above, made of the fiber optic plate, the image on the XY coordinate plane positioned in contact with the bottom portion 412 of the collimating member 406 is retained as it is after it has passed through the optical fiber bundle 414 so as to be imaged on the corresponding upper surface 413. Since the thus formed image has no substantial parallax, the desired point can be accurately specified by using the intersection of the hair cross line formed in the collimating member 406, that is, the central point P₀ as the collimation with the thus formed image observed.

With the central point P₀ of the cursor coincided with the coordinate point to be input, incident light beams to be scanned angularly along the coordinate plane are emitted from the light sources P₁ and P₂ which are positioned away from each other by a predetermined distance L similarly to the above-described arrangements. As shown in Fig. 15(a), when an incidental light beams 409 emitted from light source P₁ agrees with an optical axis 408 connecting the central point P₀ and the light beam P₁, the incident light 409 reflected vertically by the reflection film 404 of the annular lens member 401 so that a reflected light beam 410 passes reversely through the same path as the incident light beam 409 when viewed in a plane manner. The reflected light 410 returns to the light source P₁ at which it is detected. The angle φ1 defined by the path of the incident light beam 409 and the reflected light beam 410 and the reference line connecting the light sources P₁ and P₂ is defined. Similarly, angle φ2 between the optical path and the above-described reference line when the incident light and emitted light are colinear with each other when viewed in a plane manner is defined. Thus, the coordinate of the central point P₀ of the cursor is obtained in accordance with the principle of the triangulation by using the thus obtained angles φ1 and φ2 and the distance L between the light sources. As a result, input of a desired coordinate is performed.

As shown in Fig. 15(c), in the continuous coordinate specifying mode, the bottom surface of the annular lens member 401 can separate from the XY coordinate plane 411 during the movement of the cursor, causing the concentric axis 407 to be temporarily inclined with respect to this plane 411. For example, it can be caused from shake of the user who is holding the support member 405 of the cursor. Even if the concentric axis inclines with respect to the coordinate plane 411, the reflected light beam 410 can inversely pass through the same optical path along which the incident light beam 409 passes when viewed in a plane manner. That is, the incident light beam 409 which has passed through the plane including the concentric axis 407 and the radial optical axis is reflected and converged by the surface of the lens formed by the outer surface 403 of the annular lens member 401 so that it is imaged on the reflection layer 404 formed on the inner surface 402. The reason for this lies in that the curvature of the lens be determined so as to make the focal point of the lens is positioned on the inner surface 402. Therefore, the light beam reflected by the reflection layer 404 is reflected by the lens outer surface 403 by a so-called cats-eye effect, and is then emitted in parallel to the incident light beam 409 toward the distant light source. Since the incident light beam 409 and the reflected light beam 410 are in parallel to each other, they cannot move away from each other.

Provided that the cursor is constituted by only a cylindrical reflection mirror, light is not, of course, made incident upon perpendicularly to the reflection mirror if the axis of the cylinder is inclined with respect to the coordinate plane. Therefore, the direction of the reflected light beam is different from that of incident light beam. As a result, the reflected light beam cannot return to the distant light source. Therefore, if the axis of the cylinder is inclined, the triangulation in accordance with the coincidence of the passages through which the incident and reflected light beams cannot be conducted. However, according to this embodiment, even if the concentric axis is inclined, no substantial problems do occur so that the triangulation can be continued.

Then, input of coordinates with the light reflection type cursor is conducted by using the thus obtained value L.

The above-described optical structures of the optical units are described only for the examples. They may be modified variously. Furthermore, the light reflection type cursor can be modified from the above-described embodiment. In addition, the movable structure of the movable optical portion can, of course, be modified variously.

According to this embodiment, the cursor is, as shown in Fig. 15(a), positioned on the input plate having a finite area. However, if the cursor is positioned within a region over which the laser beams can reach, it can be positioned on an optional level plane or vertical plane.

Although the object of the present invention is to enlarge the size of the apparatus, the present invention can, of course, be applied to the apparatus of the conventional size, for example, sizes smaller than A0.

It is further understood by those skilled in the art that the foregoing description is preferred embodiment of the disclosed apparatus and that various changes and modifications may be made in the invention without departing from the scope of the invention which is defined by the claims. For example, as disclosed in Japanese Patent Laid-Open No. 60-95644, the optical system and the coordinate detection plane are disposed perpendicularly to each other with respect to the mirror.

## Claims

1. An optical coordinate input apparatus comprising:
a reflection type position indicator (301) capable of designating a coordinate to be input and movably disposed over a two-dimensional coordinate plane (302) so that incident light passing along an optical path which is directed toward a central axis of the position indicator is reflected, said reflected light being then passed reversely along said optical path;
a light source portion (303) including a pair of light source units (304,305) mounted on said coordinate plane so as to emit said incident light which angularly scans said coordinate plane from two points (P₁,P₂) disposed away from each other on a reference line, said light source units being capable of receiving light which is passing reversely after it has been reflected by said position indicator when said incident light coincides with said optical path, and transmitting an output signal; and
a calculating portion (306) capable of calculating the angles (ϑ₁,ϑ₂) between said optical paths connecting said two points (P₁,P₂) to the central axis of said position indicator (301) and said reference line and further calculating said coordinate designated by said position indicator by using the thus calculated angles and a distance (L) between said two points in accordance with a principle of triangulation,
**characterized** in that said light source portion (303) is of a movable type in which said pair of light source units (304, 305) are relatively movable along said reference line so that the distance (L) between said two points (P₁,P₂) can be adjusted so as to correspond to the size of said coordinate plane (302).

2. An optical coordinate input apparatus according to claim 1, wherein said light source portion (303) comprises an elongate base member (308) capable of defining said reference line, one of said light source units (304) being fixed at an end portion of said base member and the other light source unit (305) being movable along said reference line.

3. An optical coordinate input apparatus according to claim 2, wherein said movable light source unit (305) includes a drive member (311) capable of automatically moving said movable light source unit.

4. An optical coordinate input apparatus according to claim 3, wherein said drive member comprises a lead screw (311) inserted into said movable light source unit, an electric motor (313) capable of rotating said lead screw, and a control circuit (314) capable of adjusting said distance (L) between said two points to a desired value by controlling the rotation of said electric motor.

5. An optical coordinate input apparatus according to any of the preceding claims, wherein each of said light source units (304, 305) comprises a laser light source capable of emitting said incident light, optical scanning means capable of angularly scanning said incident light, and an optical sensor capable of receiving light reflected by said position indicator (301) so as to generate a detection signal.

6. An optical coordinate input apparatus according to claim 5, wherein said optical scanning means is a rotary mirror.

7. An optical coordinate input apparatus according to claim 6, wherein said optical scanning means is a polygonal rotary mirror.

8. An optical coordinate input apparatus according to claim 5, wherein each of said light source units has an optical system disposed between said laser light source and said optical scanning means.

9. An optical coordinate input apparatus according to claim 1, wherein said calculating portion comprises a circuit (306) capable of obtaining the distance (L) between said two points (P₁,P₂) in accordance with: the angles between said reference line and the optical paths connecting said two points (P₁,P₂) and said central axis of said position indicator (301) which is positioned at a first coordinate point; the angles between said reference line and the optical paths connecting said two points and said central axis of said position indicator which is positioned at another coordinate point which is positioned away from said first coordinate point by a predetermined distance; and said predetermined distance.

10. An optical coordinate input apparatus according to claim 1, wherein said position indicator is provided with a coordinate calculation instruction signal generating circuit capable of generating a signal for instructing a calculation of the coordinates, and said calculating portion is arranged to calculate the coordinate in accordance with an output signal from said coordinate calculation instruction signal generating circuit.

11. A position indicator for optically inputting coordinates comprising:
an annular lens member (401) made of an optical material in the form of an annular shape having an inner surface (402) and an outer surface (403) concentric therewith, wherein said inner surface is parallel with the geometric central axis (407) of the annular lens member and said outer surface is formed to have a shape curved outward with a predetermined curvature whereby a lens surface (403) having its optical axis oriented in the radial direction of said annular shape is formed, said lens having its focal point on said inner surface (402);
a reflection layer (404) disposed on said inner surface of said annular lens member and capable of reflecting light which has been made incident there-upon through said annular lens member;
a support member (405) capable of supporting said annular lens member and moving the same over a given coordinate plane (411) with said geometric central axis of the annular member retained perpendicular to said coordinate plane; and
a collimating member (406) for aligning a central point through which said central axis (407) of said annular lens member passes with a specific point on said coordinate plane.

12. A position indicator according to claim 11, wherein said annular lens member (401) is constituted by high refracting factor glass and has a ground outer surface.

13. A position indicator according to claim 11, wherein said reflection layer (404) is constituted by a thin metal layer.

14. A position indicator according to claim 11, wherein said support member (405) comprises a bottom portion (415) which is slidable in contact with said coordinate plane (411) and a fixing portion (416) capable of fixing said annular lens member in such a manner that said central axis (407) thereof is perpendicular to said bottom portion.

15. A position indicator according to claim 11, wherein said collimating member (406) comprises a fiber optic plate which is fastened to the inner portion of said annular lens member and comprises a bottom portion (412) which in use is positioned in contact with said coordinate plane, an upper surface (413) which is in parallel to said bottom portion and a parallel bundle of optical fibers (414) connecting said bottom portion and said upper surface.

## Patentansprüche

1. Optische Koordinateneingabevorrichtung mit:
einem Reflexions-Positionszeiger (301), der in der Lage ist, eine einzugebende Koordinate anzugeben, und der über eine zweidimensionale Koordinatenebene (302) beweglich angeordnet ist, so daß langs eines auf eine Mittelachse des Positionszeigers gerichteten optischen Pfades einfallendes Licht reflektiert wird und das reflektierte Licht dann entgegengesetzt längs des optischen Pfades verlauft,
einem Lichtquellenteil (303) mit zwei Lichtquelleneinheiten (304, 305), die auf der Koordinatenebene montiert sind, um das einfallende Licht auszusenden, das die Koordinatenebene winkelförmig von zwei entfernt zueinander auf einer Bezugslinie angeordneten Punkten (P₁, P₂) aus abtastet, wobei die Lichtquelleneinheiten in der Lage sind, Licht zu empfangen, das sich entgegengesetzt ausbreitet, nachdem es an dem Positionszeiger reflektiert worden ist, wenn das einfallende Licht mit dem genannten optischen Pfad zusammenfällt, und ein Ausgangssignal auszugeben, und
einem Berechnungsteil (306), der in der Lage ist, die Winkel (ϑ₁, ϑ₂) zwischen den optischen Pfaden, die die beiden Punkte (P₁, P₂) mit der Mittelachse des Positionszeigers (303) verbinden, und der Bezugslinie zu berechnen und weiterhin die durch den Positionzeiger angegebene Koordinate zu berechnen, unter Verwendung der so berechneten Winkel und einer Entfernung (L) zwischen den beiden Punkten in Übereinstimmung mit einem Triangulationsprinzip,
dadurch **gekennzeichnet**, daß der Lichtquellenteil (303) von einer beweglichen Bauart ist, bei der die beiden Lichtquelleneinheiten (304, 305) langs der Bezugslinie relativ beweglich sind, so daß die Entfernung (L) zwischen den beiden Punkten (P₁, P₂) entsprechend der Größe der Koordinatenebene (302) eingestellt werden kann.

2. Optische Koordinateneingabevorrichtung nach Anspruch 1, bei der der Lichtquellenteil (303) ein langgestrecktes Basiselement (308) aufweist, das die genannte Bezugslinie bilden kann, eine der Lichtquelleneinheiten (304) an einem Endabschnitt des Basiselements befestigt ist und die andere Lichtquelleneinheit (305) langs der Bezugslinie beweglich ist.

3. Optische Koordinateneingabevorrichtung nach Anspruch 2, bei der die bewegliche Lichtquelleneinheit (305) ein Antriebselement (311) aufweist, das in der Lage ist, die bewegliche Lichtquelleneinheit automatisch zu bewegen.

4. Optische Koordinateneingabevorrichtung nach Anspruch 3, bei der das Antriebselement eine in die bewegliche Lichtquelleneinheit eintretende Gewindespindel (311), einen Elektromotor (313), der die Gewindespindel drehen kann, und eine Steuerschaltung (314) aufweist, die in der Lage ist, die Entfernung (L) zwischen den beiden Punkten auf einen gewünschten Wert einzustellen, indem sie die Drehung des Elektromotors steuert.

5. Optische Koordinateneingabevorrichtung nach einem der vorstehenden Ansprüche, bei der jede der Lichtquelleneinheiten (304, 305) eine Laserlichtquelle, die in der Lage ist, das einfallende Licht auszusenden, optische Abtastmittel, die zur winkelförmigen Abtastung mit dem einfallenden Licht in der Lage sind, und einen optischen Sensor aufweist, der in der Lage ist, das von dem Positionszeiger (301) reflektierte Licht zu empfangen, um ein Detektionssignal zu erzeugen.

6. Optische Koordinateneingabevorrichtung nach Anspruch 5, bei der die optische Abtasteinrichtung ein Drehspiegel ist.

7. Optische Koordinateneingabevorrichtung nach Anspruch 6, bei der die optische Abtasteinrichtung ein polygonaler Drehspiegel ist.

8. Optische Koordinateneingabevorrichtung nach Anspruch 5, bei der jede der Lichtquelleneinheiten ein optisches System aufweist, das zwischen der Laserlichtquelle und der optischen Abtasteinrichtung angeordnet ist.

9. Optische Koordinateneingabevorrichtung nach Anspruch 1, bei der der Berechnungsteil eine Schaltung (306) aufweist, die in der Lage ist, die Entfernung (L) zwischen den beiden Punkten (P₁, P₂) zu bestimmen anhand: der Winkel zwischen der Bezugslinie und den optischen Pfaden, die die Punkte (P₁, P₂) und die Mittelachse des an einem ersten Koordinatenpunkt positionierten Positionszeigers (301) verbinden; der Winkel zwischen der Bezugslinie und den optischen Pfaden, die die zwei Punkte und die Mittelachse des Positionszeigers verbinden, der an einem anderen Koordinatenpunkt positioniert ist, der zu dem ersten Koordinatenpunkt eine vorgegebene Entfernung aufweist; und dieser vorgegebenen Entfernung.

10. Optische Koordinateneingabevorrichtung nach Anspruch 1, bei der der Positionszeiger mit einer Koordinatenberechnungs-Befehlssignal-Erzeugungsschaltung versehen ist, die in der Lage ist, ein Signal zum Auslösen einer Koordinatenberechnung zu erzeugen, und der Berechnungsteil dazu ausgebildet ist, die Koordinate in Übereinstimmung mit einem Ausgangssignal der Koordinatenberechnungs-Befehlssignal-Erzeugungsschaltung zu berechnen.

11. Positionszeiger für die optische Eingabe von Koordinaten, mit:
einem ringförmigen Linsenelement (401) aus einem optischen Material in einer ringförmigen Gestalt mit einer inneren Oberfläche (402) und einer damit konzentrischen äußeren Oberfläche (403), wobei die innere Oberfläche zu der geometrischen Mittelachse (407) des ringförmigen Linsenelements parallel ist und die äußere Oberfläche so gestaltet ist, daß sie eine mit einer vorgegebenen Krümmung auswärts gekrümmte Form hat, wodurch eine Linsenoberfläche (403) gebildet wird, deren optische Achse in Radialrichtung der ringförmigen Gestalt orientiert ist, welche Linse ihren Brennpunkt auf der inneren Oberfläche (402) hat,
einer Reflexionsschicht (404), die auf der inneren Oberfläche des ringförmigen Linsenelements angeordnet ist und in der Lage ist, Licht zu reflektieren, das durch das ringförmige Linsenelement auf sie auffällt,
einem Halteelement (405), das in der Lage ist, das ringförmige Linsenelement zu halten und es über eine gegebene Koordinatenfläche (411) zu bewegen, wobei die geometrische Mittelachse des ringförmigen Elements rechtwinklig zu der Koordinatenebene gehalten wird, und
einem Kollimierelement (406) zum Ausrichten eines Mittelpunktes, durch den die Mittelachse (407) des ringförmigen Linsenelements verläuft, mit einem speziellen Punkt auf der Koordinatenebene.

12. Positionszeiger nach Anspruch 11, bei dem das ringförmige Linsenelement (411) durch Glas mit hohem Brechungsindex gebildet wird und eine geschliffene äußere Oberfläche besitzt.

13. Positionszeiger nach Anspruch 11, bei dem die Reflexionsschicht (404) durch eine dünne Metallschicht gebildet wird.

14. Positionszeiger nach Anspruch 11, bei dem das Halteelement (405) einen Boden (415), der in Berührung mit der Koordinatenebene (411) gleiten kann, und einen Befestigungsteil (416) aufweist, der in der Lage ist, das ringförmige Linsenelement so zu fixieren, daß seine Mittelachse (407) zu dem Boden rechtwinklig ist.

15. Positionszeiger nach Anspruch 11, bei dem das Kollimierelement (406) eine faseroptische Platte aufweist, die an dem inneren Teil des ringförmigen Linsenelements befestigt ist und einen Boden (412), der bei Gebrauch mit der Koordinatenebene in Berührung steht, eine zu dem Boden parallele obere Oberfläche (413) und ein paralleles Bündel von optischen Fasern (414) aufweist, die den Boden mit der oberen Oberfläche verbinden.

## Revendications

1. Dispositif optique d'entrée de coordonnées, comprenant:
un indicateur (301) de position de type à réflexion, permettant de désigner une coordonnée à entrer et disposé de manière à pouvoir être déplacé sur un plan bidimensionnel (302) de coordonnées de façon que la lumière incidente passant par un trajet optique dirigé vers l'axe central de l'indicateur de position soit réfléchie, ladite lumière réfléchie étant ensuite amenée à passer en sens inverse par ledit trajet optique;
une partie formant source lumineuse (303) comportant une paire d'unités de sources lumineuses (304, 305) montées sur ledit plan de coordonnées de façon à émettre ladite lumière incidente qui balaye angulairement ledit plan de coordonnées à partir de deux points (P₁, P₂) distants l'un de l'autre sur une ligne de référence, lesdites unités de sources lumineuses étant aptes à recevoir la lumière qui circule en sens inverse après avoir été réfléchie par ledit indicateur de position lorsque ladite lumière incidente coïncide avec ledit trajet optique, et émettant un signal de sortie; et
une partie de calcul (306) permettant de calculer les angles (ϑ₁,ϑ₂) entre lesdits trajets optiques reliant lesdits deux points (P₁,P₂) à l'axe central dudit indicateur (301) de position et à ladite ligne de référence et calculant en outre ladite coordonnée désignée par ledit indicateur de position à l'aide des angles ainsi calculés et d'une distance (L) entre lesdits deux points selon un principe de triangulation,
**caractérisé** en ce que ladite partie formant source lumineuse (303) est d'un type mobile les unités de sources lumineuses (304, 305) de ladite paire étant mobiles l'une par rapport à l'autre le long de ladite ligne de référence de façon que la distance (L) entre lesdits deux points (P₁,P₂) puisse être réglée afin de correspondre aux dimensions dudit plan (302) de coordonnées.

2. Dispositif optique d'entrée de coordonnées selon la revendication 1, dans lequel ladite partie formant source lumineuse (303) comporte un élément de base allongé (308) permettant de définir ladite ligne de référence, une desdites unités de sources lumineuses (304) étant fixée au niveau d'une extrémité dudit élément de base et l'autre unité de source lumineuse (305) pouvant être déplacée le long de ladite ligne de référence.

3. Dispositif optique d'entrée de coordonnées selon la revendication 2, dans lequel ladite unité de source lumineuse mobile (305) comporte un élément d'entraînement (311) permettant de déplacer automatiquement ladite unité de source lumineuse mobile.

4. Dispositif optique d'entrée de coordonnées selon la revendication 3, dans lequel ledit élément d'entraînement comporte une vis mère (311) insérée dans ladite unité de source lumineuse mobile, un moteur électrique (313) permettant de faire tourner ladite vis mère, et un circuit de commande (314) permettant de régler à une valeur voulue ladite distance (L) entre lesdits deux points en commandant la rotation dudit moteur électrique.

5. Dispositif optique d'entrée de coordonnées selon l'une quelconque des revendications précédentes, dans lequel chacune desdites unités de sources lumineuses (304, 305) comporte une source de lumière laser permettant d'émettre ladite lumière incidente, un moyen de balayage optique permettant un balayage angulaire par ladite lumière incidente, et un détecteur optique apte à recevoir la lumière réfléchie par ledit indicateur (301) de position de façon à produire un signal de détection.

6. Dispositif optique d'entrée de coordonnées selon la revendication 5, dans lequel ledit moyen de balayage optique est un miroir rotatif.

7. Dispositif optique d'entrée de coordonnées selon la revendication 6, dans lequel ledit moyen de balayage optique est un miroir polygonal rotatif.

8. Dispositif optique d'entrée de coordonnées selon la revendication 5, dans lequel chacune desdites unités de sources lumineuses comporte un système optique disposé entre ladite source de lumière laser et ledit moyen de balayage optique.

9. Dispositif optique d'entrée de coordonnées selon la revendication 1, dans lequel ledit moyen de calcul comporte un circuit (306) permettant d'obtenir la distance (L) entre lesdits deux points (P₁,P₂) en fonction: des angles entre ladite ligne de référence et les trajets optiques reliant lesdits deux points (P₁,P₂) et ledit axe central dudit indicateur (301) de position situé à un premier point de coordonnées; des angles entre ladite ligne de référence et les trajets optiques reliant lesdits deux points et ledit axe central dudit indicateur de position situé à un autre point de coordonnée éloigné dudit premier point de coordonnées par une distance prédéterminée; et de ladite distance prédéterminée.

10. Dispositif optique d'entrée de coordonnées selon la revendication 1, dans lequel ledit indicateur de position est pourvu d'un circuit générateur de signal d'instruction de calcul de 'coordonnées permettant de produire un signal d'instruction pour demander un calcul des coordonnées, et ledit moyen de calcul est conçu pour calculer les coordonnées en fonction d'un signal produit par ledit circuit générateur de signal d'instruction de calcul de coordonnées.

11. Indicateur de position pour l'entrée optique de coordonnées, comprenant:
un élément formant lentille annulaire (401) en matière optique, de forme annulaire, ayant une surface intérieure (402) et une surface extérieure (403) concentrique à celle-ci, dans lequel ladite surface intérieure est parallèle à l'axe géométrique central (407) de la lentille annulaire et ladite surface extérieure est réalisée de façon à avoir une forme courbe vers l'extérieur avec une courbure prédéterminée, grâce à quoi il est réalisé une surface (403) de lentille dont l'axe optique est orienté dans la direction radiale de ladite forme annulaire, le foyer de ladite lentille étant sur ladite surface intérieure (402);
une couche de réflexion (404) disposée sur ladite surface intérieure de ladite lentille et apte à réfléchir la lumière amenée à frapper celle-ci par l'intermédiaire de ladite lentille annulaire;
un élément de support (405) apte à supporter ladite lentille annulaire et déplaçant celle-ci sur un plan de coordonnées donné (411), ledit axe géométrique central de l'élément annulaire étant maintenu perpendiculaire audit plan de coordonnées; et
un élément collimateur (406) pour aligner un point central, par lequel passe ledit axe central (407) de ladite lentille annulaire, avec un point spécifique sur ledit plan de coordonnées.

12. Indicateur de position selon la revendication 11, dans lequel ledit élément formant lentille annulaire (401) est constitué par un verre à indice de réfraction élevé et a une surface extérieure rectifiée.

13. Indicateur de position selon la revendication 11, dans lequel ladite couche de réflexion (404) est constituée par une mince couche métallique.

14. Indicateur de position selon la revendication 11, dans lequel ledit élément de support (405) comporte une partie inférieure (415) qui peut coulisser au contact dudit plan de coordonnées (411) et une partie de fixation (416) permettant de fixer ladite lentille annulaire de telle manière que ledit axe central (407) de celle-ci soit perpendiculaire à ladite partie inférieure.

15. Indicateur de position selon la revendication 11, dans lequel ledit élément collimateur (406) comporte une plaque de fibres optiques qui est fixée à la partie intérieure de ladite lentille annulaire et qui comporte une partie inférieure (412) qui, en fonctionnement, est placée au contact dudit plan de coordonnées, une surface supérieure (413) qui est parallèle à ladite partie inférieure et un faisceau parallèle de fibres optiques (414) reliant ladite partie inférieure et ladite surface supérieure.
